# EUROPEAN PATENT APPLICATION

(11) **EP 4 539 457 A1**
(43) Date of publication of application: **16.04.2025**
(21) Application number: 24196905.4
(22) Date of filing: 28.08.2024
(51) Int. Cl.: H04N 19/117, H04N 19/176, H04N 19/59, H04N 19/82

(54) **SUBBLOCK-BASED ADAPTIVE INTERPOLATION FILTER IN DIGITAL VIDEO CODING**

(30) Priority: 10.10.2023 US 202363589260 P; 15.02.2024 US 202418442830
(71) Applicant: Intel Corporation, Santa Clara, CA 95054 (US)
(72) Inventor: Mahdi, Nader, Maple Ridge, v2x7G9 (CA)
(74) Representative: Goddar, Heinz J.

(57) **Abstract**

In block-based video compression, interpolation filters may be used in the process of motion compensation or in block-prediction to blend the pixels in the predicted block spatially and generate the reconstructed block. However, the content within a block can vary significantly across the block and using a single interpolation filter type for the entire block may not be sufficient to provide effective motion compensation. To address the concern more effectively, a subblock adaptive interpolation filtering approach can be implemented in a video codec to improve the quality of the reconstructed block while being able to keep file sizes small. Subblock adaptive interpolation filtering can be implemented by using different interpolation filter types for each subblock of the block. Subblock adaptive interpolation filtering can result in improved motion compensation and higher video quality.

## Description

### Cross-reference to Related Applications

This non-provisional application claims priority to and/or receives benefit from provisional application, titled "SUBBLOCK-BASED ADAPTIVE INTERPOLATION FILTER IN DIGITAL VIDEO CODING", serial no. 63/589,260, filed on October 10, 2023. The provisional application is hereby incorporated by reference in its entirety.

### Background

Video compression is a technique for making video files smaller and easier to transmit over the Internet. There are different methods and algorithms for video compression, with different performance and tradeoffs. Video compression involves encoding and decoding. Encoding is the process of transforming (uncompressed) video data into a compressed format. Decoding is the process of restoring video data from the compressed format. An encoder-decoder system is called a codec.

### Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.
Figure (FIG.) 1 illustrates an encoding system and a plurality of decoding systems, according to some embodiments of the disclosure.
FIG. 2 illustrates an exemplary encoder to encode video frames and output an encoded bitstream, according to some embodiments of the disclosure.
FIG. 3 illustrates an exemplary decoder to decode an encoded bitstream and output a decoded video, according to some embodiments of the disclosure.
FIG. 4 illustrates a process for encoding a block of a frame, according to some embodiments of the disclosure.
FIG. 5 illustrates a process for decoding a block of a frame, according to some embodiments of the disclosure.
FIG. 6 illustrates exemplary partition shapes, according to some embodiments of the disclosure.
FIG. 7 illustrates an example of a filter set, according to some embodiments of the disclosure.
FIG. 8 illustrates another example of a filter set, according to some embodiments of the disclosure.
FIG. 9 depicts the filter set in FIG. 8, according to some embodiments of the disclosure.
FIG. 10 illustrates an example of a partition shape and filter types selection process, according to some embodiments of the disclosure.
FIG. 11 depicts a flow diagram of an exemplary method for decoding an encoded bitstream, according to some embodiments of the disclosure.
FIG. 12 depicts a flow diagram of an exemplary method for encoding a video, according to some embodiments of the disclosure.
FIG. 13 depicts a block diagram of an exemplary computing device, according to some embodiments of the disclosure.

### Detailed Description

### Overview

Video coding or video compression is the process of compressing video data for storage, transmission, and playback. Video compression may involve taking a large amount of raw video data and applying one or more compression techniques to reduce the amount of data needed to represent the video while maintaining an acceptable level of visual quality. Video compression is a technology for efficient storage and transmission of video content over limited bandwidth networks.

A video includes one or more (temporal) sequences of video frames or frames. Frames have frame indices that indicate positions of the frames within the video, or the one or more sequences. A frame may include an image, or a single still image. A frame may have millions of pixels. For example, a frame for an uncompressed 4K video may have a resolution of 3840x2160 pixels. Pixels may have luma/luminance and chroma/chrominance values. In video compression, a frame may be partitioned into blocks for block-based processing or block-based compression. Blocks may have sizes which are much smaller, such as 512x512 pixels, 256x256 pixels, 128x128 pixels, 64x64 pixels, 32x32 pixels, 16x16pixels, 8x8 pixels, 4x4 pixels, etc. A block may include a square or rectangular region of a frame.

In video compression, motion compensation is a tool for reducing temporal redundancy between video frames. Motion compensation may involve predicting a block in a current frame from a reference block in a previously encoded frames using a motion estimation process or algorithm, followed by interpolation of the predicted block (e.g., by applying an interpolation filter) to generate the reconstructed block.

In video compression, block-prediction may be used to reduce spatial redundancy within a video frame. Block-prediction may involve predicting a block in a current frame from a reference block in the same frame using a vector estimation process or algorithm, followed by interpolation of the predicted block (e.g., by applying an interpolation filter) to generate the reconstructed block.

Interpolation filters may be used in the process of motion compensation or in block-prediction to blend the pixels in the predicted block spatially and generate the reconstructed block. Interpolation filters may help to reduce distortion or artifacts in the reconstructed block. Interpolation filters may help make the reconstructed block match the original or source block better. In some cases, a set of fixed interpolation filter types may be used for each block size in the video codec, and the encoder may select one filter type to use for the entire block based on the characteristics of the block and the video content. Interpolation filter types may include filters that can derive sub-pixel information. Interpolation filter types may include multi-tap finite-impulse-response (FIR) filters. Interpolation filter types may assist with fractional motion estimation. Interpolation filter types may include neural-network based filters that implement a suitable kernel. Interpolation filter types may include affine motion filters. Interpolation filter types may include resampling filters. Interpolation filter types may include a smooth/smoothing filter. Interpolation filter types may include a sharp/sharpening filter. Interpolation filter types may include a regular filter. Regular, smooth, and sharp filters may have different filter coefficients to achieve different filtering effects.

However, the content within a block can vary significantly across the block and using a single interpolation filter type for the entire block may not be sufficient to provide effective motion compensation. Moreover, the block size used in modern video codecs can be very large, up to 256x256 pixels, 512x512 pixels, or more. This may increase the need for an effective filtering approach to address spatial variations within a block. Therefore, using a single interpolation filter type for such large block sizes may not be sufficient to provide effective motion compensation, as the content within the block and its spatial characteristics can vary significantly across the block.

One approach to addressing this concern involves dividing the block into smaller blocks in the block-partitioning process in block-based compression and treating the smaller blocks as independent blocks in the encoded bitstream. The smaller blocks would be encoded as individual blocks, and different interpolation filter types can be selected for the smaller blocks. In other words, the approach allows the selection of a different interpolation filter for each smaller block. However, this approach comes at a cost. Additional signaling (e.g., additional bits) would be needed to signal coding parameters for the smaller blocks. Entropy may increase when different signaling is used for the smaller blocks, which can lead to entropy coding inefficiencies.

To address the concern more effectively, a subblock adaptive interpolation filtering approach can be implemented in a video codec to improve the quality of the reconstructed block while being able to keep file sizes small. Subblock adaptive interpolation filtering can be implemented by using different interpolation filter types for each subblock of the block. Subblock adaptive interpolation filtering can result in improved motion compensation and higher video quality.

As used herein, a subblock refers to a region, part, or area of a block. A subblock is not a smaller block partitioned from a larger block or superblock in a block-partitioning process in block-based compression. In the encoded bitstream, a subblock is not encoded as a block having its own, individual, or separate block header or signaling information.

One technical task for implementing subblock adaptive interpolation filtering in video compression is to develop an efficient subblock adaptive filtering method that can effectively improve motion compensation and video quality in video coding while minimizing the computational and signaling overhead.

One aspect of the subblock adaptive filtering technique involves enabling subblock-based interpolation filter selection in the encoder to improve the motion compensation process and enhance video quality. The video encoder may be allowed to select, (1) a partition shape among a set of predefined partition shapes and (2) for each partition of the selected partition shape an interpolation filter type among a set of interpolation filter types or options. The video encoder may optimize for filter costs, which may include one or more of: distortion cost and signaling cost.

Another aspect of the subblock adaptive filtering technique involves encoding the interpolation filter information effectively in the encoded bitstream. In some cases, the indexes of the block partition shape and the interpolation filter type(s) may be signaled in the bitstream as interpolation filter information. In some cases, the set of interpolation filter options may include one or more options involving applying different interpolation filter types within different regions of the block. The index of the interpolation filter option may be signaled in the bitstream as interpolation filter information. The interpolation filter information can be used by the decoder in the motion compensation process.

The subblock adaptive filtering technique can be used in any video codec that employs interpolation filters for motion compensation in inter-frame prediction, or block-prediction in intra-frame prediction. Video codec standards may be used in a wide range of applications, including, e.g., video streaming, video conferencing, broadcasting, and more. Some examples of video codec standards that can adopt the subblock adaptive filtering technique include, AVC (Advanced Video Coding), HEVC (High Efficiency Video Coding), and AV1 (AOMedia Video 1), and VVC (Versatile Video Coding). AVC, also known as "ITU-T H.264 (08/21)", was approved 2021-08-22. HEVC, also known as "H.265 ITU-T H.265 (V9) (09/2023)", was approved 2023-09-13. AV1 is a video coding codec designed for video transmissions over the Internet. "AV1 Bitstream & Decoding Process Specification" version 1.1.1 with Errata was last modified on 2019-01-18. VVC, also known as "ITU-T H.266 (V3) (09/2023)", was approved 2023-09-29.

The approach can be incorporated into hardware and/or software that support interpolation filtering, e.g., in the motion compensation process, such as SVT-AV1 (Scalable Video Technology AV1 Encoder), SVT-VP9 (Scalable Video Technology VP9 Encoder) and SVT-HEVC (Scalable Video Technology for HEVC Encoder). The approach can enable more effective motion compensation by allowing different interpolation filter types to be used for different areas, parts, or regions of the predicted block, which can better capture the local characteristics of the video content and result in higher video quality.

The adaptive subblock filtering technique described herein may be a solution to the problem of subblock filtering in video coding, where the benefit of using different filters for different regions of a block cannot be achieved easily or effectively by simply dividing the block into smaller blocks due to the computational and signaling overhead involved. The benefits of the proposed adaptive subblock filtering technique may include improved compression efficiency and reduced computational complexity compared to alternative techniques. The technique may allow for adaptive subblock filtering based on the characteristics of each block and can improve the visual quality of the encoded video. The method can be implemented in any video coding standard that supports motion compensation with interpolation filtering. The method can be implemented in any video coding standard that supports block-prediction with interpolation filtering.

### Video compression

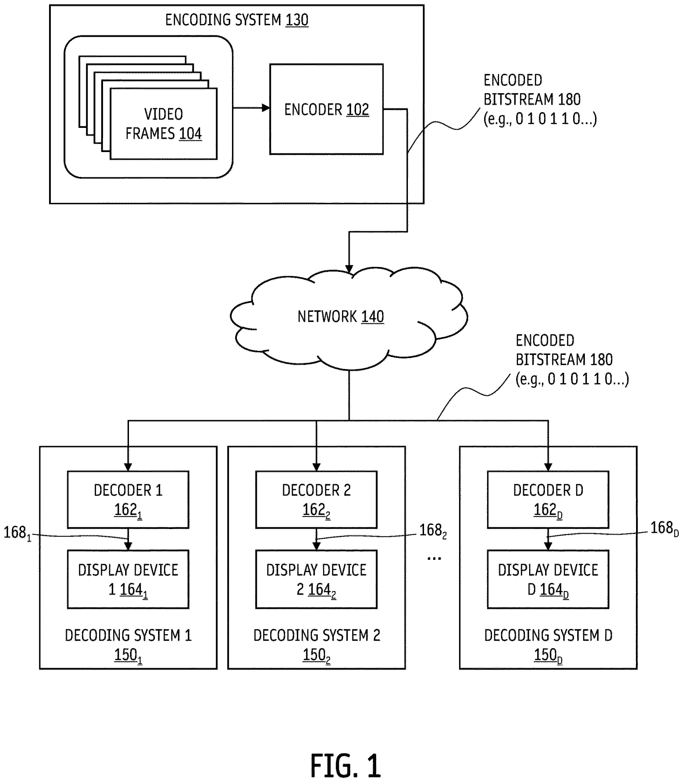

FIG. 1 illustrates encoding system 130 and one or more decoding systems 150_{1...D}, according to some embodiments of the disclosure.

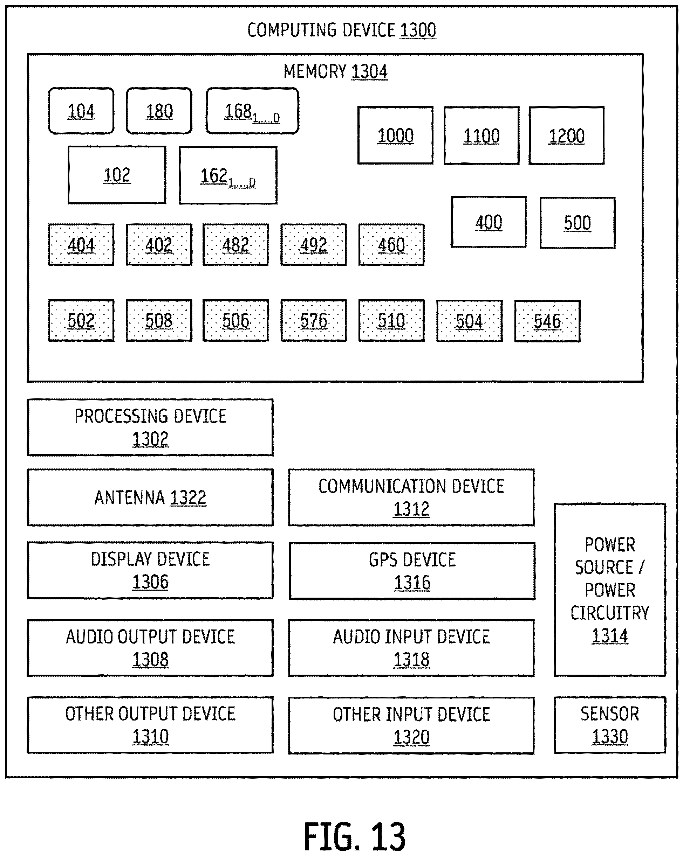

Encoding system 130 may be implemented on computing device 1300 of FIG. 13. Encoding system 130 can be implemented in the cloud or in a data center. Encoding system 130 can be implemented on a device that is used to capture the video. Encoding system 130 can be implemented on a standalone computing system. Encoding system 130 may perform the process of encoding in video compression. Encoding system 130 may receive a video (e.g., uncompressed video, original video, raw video, etc.) comprising a sequence of video frames 104. The video frames 104 may include image frames or images that make up the video. A video may have a frame rate or number of frames per second (FPS), that defines the number of frames per second of video. The higher the FPS, the more realistic and fluid the video looks. Typically, FPS is greater than 24 frames per second for a natural, realistic viewing experience to a human viewer. Examples of video may include a television episode, a movie, a short film, a short video (e.g., less than 15 seconds long), a video capturing gaming experience, computer screen-content, video conferencing content, live event broadcast content, sports content, a surveillance video, a video shot using a mobile computing device (e.g., a smartphone), etc. In some cases, video may include a mix or combination of different types of video.

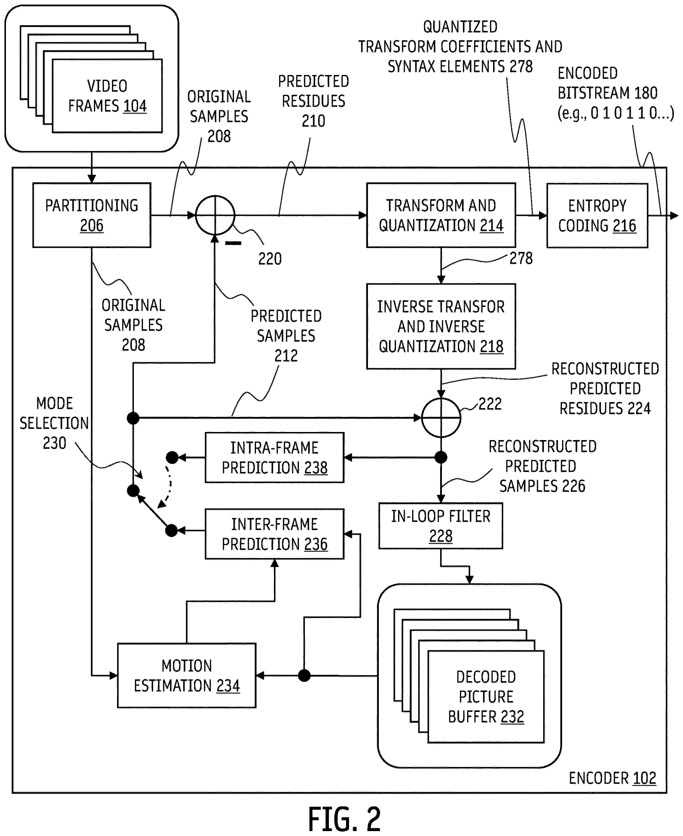

Encoding system 130 may include encoder 102 that receives video frames 104 and encodes video frames 104 into encoded bitstream 180. An exemplary implementation of encoder 102 is illustrated in FIG. 2.

Encoded bitstream 180 may be compressed, meaning that encoded bitstream 180 may be smaller in size than video frames 104. Encoded bitstream 180 may include a series of bits, e.g., having 0's and 1's. Encoded bitstream 180 may have header information, payload information, and footer information, which may be encoded as bits in the bitstream. Header information may provide information about one or more of: the format of encoded bitstream 180, the encoding process implemented in encoder 102, the parameters of encoder 102, and metadata of encoded bitstream 180. For example, header information may include one or more of: resolution information, frame rate, aspect ratio, color space, etc. Payload information may include data representing content of video frames 104, such as samples frames, symbols, syntax elements, etc. For example, payload information may include bits that encode one or more of motion predictors, transform coefficients, prediction modes, and quantization levels of video frames 104. Footer information may indicate an end of the encoded bitstream 180. Footer information may include other information including one or more of: checksums, error correction codes, and signatures. Format of encoded bitstream 180 may vary depending on the specification of the encoding and decoding process, i.e., the codec.

Encoded bitstream 180 may include packets, where encoded video data and signaling information may be packetized. One exemplary format is the Open Bitstream Unit (OBU), which is used in AV1 encoded bitstreams. An OBU may include a header and a payload. The header can include information about the OBU, such as information that indicates the type of OBU. Examples of OBU types may include sequence header OBU, frame header OBU, metadata OBU, temporal delimiter OBU, and tile group OBU. Payloads in OBUs may carry quantized transform coefficients and syntax elements that may be used in the decoder to properly decode the encoded video data to regenerate video frames.

Encoded bitstream 180 may be transmitted to one or more decoding systems 150_{1...D}, via network 140. Network 140 may be the Internet. Network 140 may include one or more of: cellular data networks, wireless data networks, wired data networks, cable Internet networks, fiber optic networks, satellite Internet networks, etc.

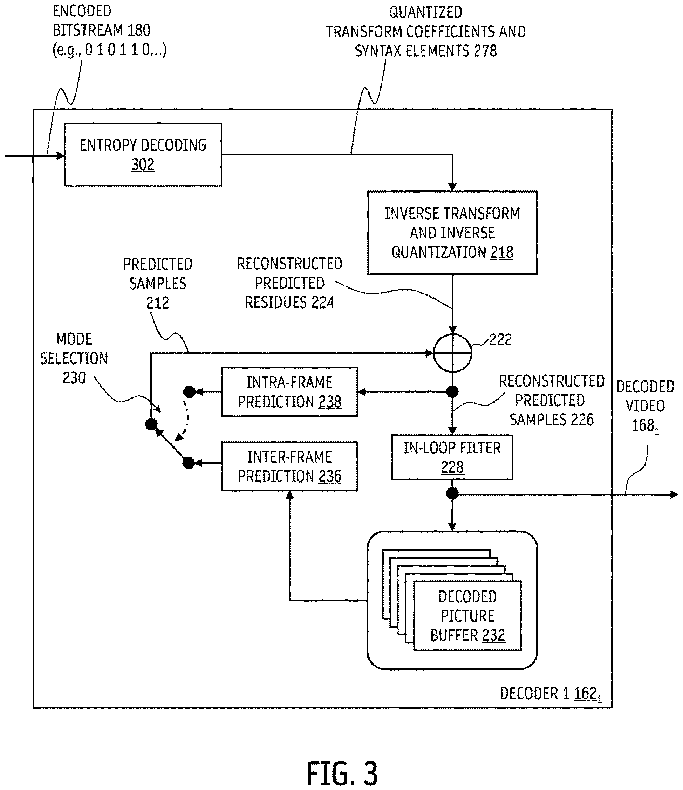

D number of decoding systems 150_{1...D} are illustrated. At least one of the decoding systems 150_{1...D} may be implemented on computing device 1300 of FIG. 13. Examples of systems 150_{1...D} may include personal computers, mobile computing devices, gaming devices, augmented reality devices, mixed reality devices, virtual reality devices, televisions, etc. Each one of decoding systems 150_{1...D} may perform the process of decoding in video compression. Each one of decoding systems 150_{1...D} may include a decoder (e.g., decoder 1...D 162_{1...D}), and one or more display devices (e.g., display device 1...D 164_{1...D}). An exemplary implementation of a decoder, e.g., decoder 1 162₁, is illustrated in FIG. 3.

For example, decoding system 1 150₁, may include decoder 1 162₁ and a display device 1 164₁. Decoder 1 162₁ may implement a decoding process of video compression. Decoder 1 162₁ may receive encoded bitstream 180 and produce decoded video 168₁. Decoded video 168₁ may include a series of video frames, which may be a version or reconstructed version of video frames 104 encoded by encoding system 130. Display device 1 164₁ may output the decoded video 168₁ for display to one or more human viewers or users of decoding system 1150₁.

For example, decoding system 2 150₂, may include decoder 2 162₂ and a display device 2 164₂. Decoder 2 162₂ may implement a decoding process of video compression. Decoder 2 162₂ may receive encoded bitstream 180 and produce decoded video 168₂. Decoded video 168₂ may include a series of video frames, which may be a version or reconstructed version of video frames 104 encoded by encoding system 130. Display device 2 164₂ may output the decoded video 168₂ for display to one or more human viewers or users of decoding system 2 150₂.

For example, decoding system D 150_{D}, may include decoder D 162_{D} and a display device D 164_{D}. Decoder D 162_{D} may implement a decoding process of video compression. Decoder D 162_{D} may receive encoded bitstream 180 and produce decoded video 168_{D}. Decoded video 168_{D} may include a series of video frames, which may be a version or reconstructed version of video frames 104 encoded by encoding system 130. Display device D 164_{D} may output the decoded video 168_{D} for display to one or more human viewers or users of decoding system D 150_{D}.

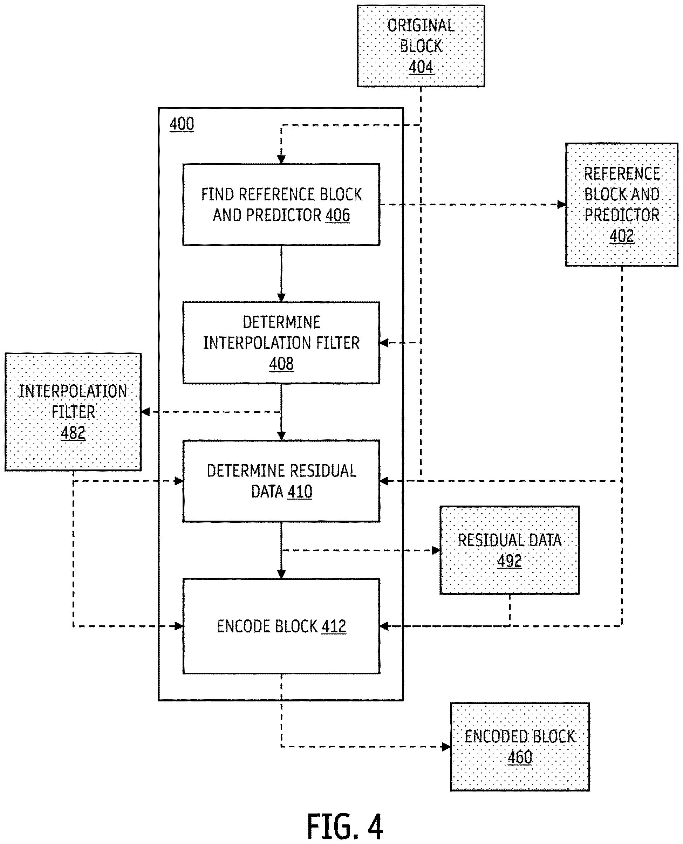

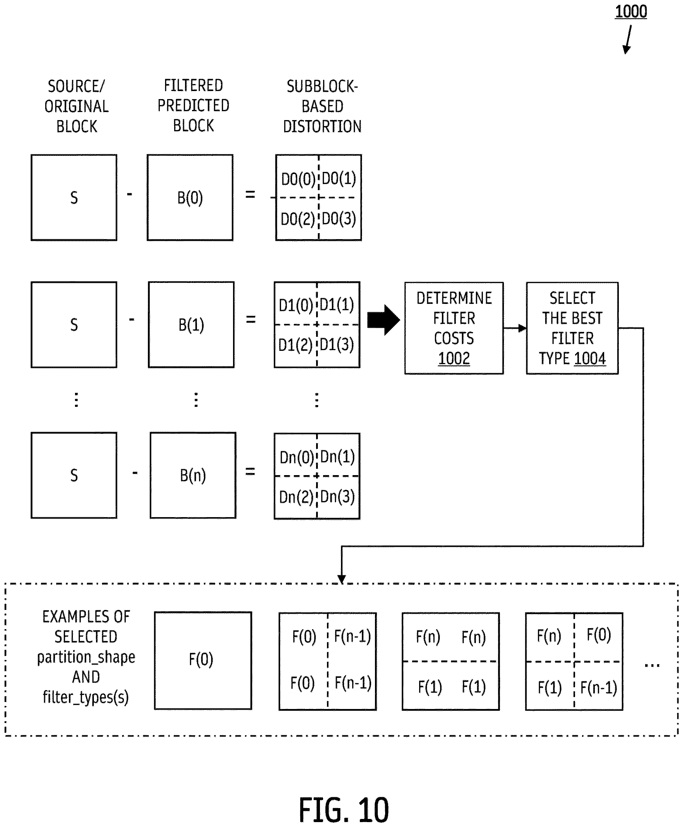

As discussed herein, encoder 102 may be modified to implement operations as illustrated in FIGS. 4, 10, and 12. Decoders such as decoder 1...D 162_{1...D}, may be modified to implement operations as illustrated in FIG. 10. Encoder 102 and decoders may implement operations relating to subblock adaptive interpolation filtering techniques illustrated in FIGS. 4-12.

### Video encoder

FIG. 2 illustrates encoder 102 to encode video frames and output an encoded bitstream, according to some embodiments of the disclosure. Encoder 102 may include one or more of: signal processing operations and data processing operations, including inter and intra-frame prediction, transform, quantization, in-loop filtering, and entropy coding. Encoder 102 may include a reconstruction loop involving inverse quantization, and inverse transformation to guarantee that the decoder would see the same reference blocks and frames. Encoder 102 may receive video frames 104 and encodes video frames 104 into encoded bitstream 180. Encoder 102 may include one or more of partitioning 206, transform and quantization 214, inverse transform and inverse quantization 218, in-loop filter 228, motion estimation 234, inter-frame prediction 236, intra-frame prediction 238, and entropy coding 216.

Partitioning 206 may divide a frame in video frames 104 into blocks of pixels. Different codecs may allow different variable range of block sizes. In one codec, a frame may be partitioned by partitioning 206 into blocks of size 128x128 or 64x64 pixels. In some cases, a frame may be partitioned by partitioning 206 into blocks of 256x256 or 512x512 pixels. Large blocks may be referred to as superblocks. Partitioning 206 may further divide each superblock using a multi-way partition tree structure. In some cases, a partition of a superblock can be recursively divided further by partitioning 206 using the multi-way partition tree structure (e.g., down to 4x4 size blocks). In another codec, a frame may be partitioned by partitioning 206 into coding tree units of size 128x128 pixels. Partitioning 206 may divide a coding tree unit using a quadtree partitioning structure into four coding units. Partitioning 206 may further recursively divide a coding unit using the quadtree partitioning structure. Partitioning 206 may (further) subdivide a coding unit using a multi-type tree structure (e.g., a quadtree, a binary tree, or ternary tree structure). A smallest coding unit may have a size of 4x4. In some codecs, coding units of luma/luminance pixels may be subdivided into smaller coding units (e.g., performing more tree structure subdivisions) than coding units of chroma pixels (e.g., stopping tree structure subdivision earlier). Partitioning 206 may output original samples 208, e.g., as blocks of pixels. Operations performed in partitioning 206 create blocks of varying sizes from a superblock and are not to be confused with partitioning operations for creating subblocks (e.g., areas, regions, or parts) of a single block.

Intra-frame prediction 238 may predict samples of a block from reconstructed predicted samples of previously encoded spatial neighboring blocks of the same frame. Intra-frame prediction 238 may receive reconstructed predicted samples 226 (of previously encoded spatial neighbor blocks of the same frame). Reconstructed predicted samples 226 may be generated by summer 222 from reconstructed predicted residues 224 and predicted samples 212. Intra-frame prediction 238 may determine a suitable predictor for predicting the samples from reconstructed predicted samples of previously encoded spatial neighboring blocks of the same frame. Intra-frame prediction 238 may generate predicted samples 212 generated using the suitable predictor. Intra-frame prediction 238 may output or identify the neighboring block and a predictor used in generating the predicted samples 212. The identified neighboring block and predictor may be encoded in the encoded bitstream 180 to enable a decoder to reconstruct a block using the same neighboring block and predictor. In one codec, intra-frame prediction 238 may support a number of diverse predictors, e.g., 56 different predictors. Some predictors, e.g., directional predictors, may capture different spatial redundancies in directional textures. Pixel values of a block can be predicted using a directional predictor in intra-frame prediction 238 by extrapolating pixel values of a neighboring block along a certain direction. Intra-frame prediction 238 of different codecs may support different sets of predictors to exploit different spatial patterns within the same frame. Examples of predictors may include direct current (DC), planar, Paeth, smooth, smooth vertical, smooth horizontal, recursive-based filtering modes, chroma-from-luma, intra-block copy, color palette, multiple-reference line, intra sub-partition, matrix-based intra-prediction (matrix coefficients may be defined by offline training using neural networks), wide-angle prediction, cross-component linear model, template matching, etc. In some cases, intra-frame prediction 238 may perform block-prediction, where a predicted block may be produced from a reconstructed neighboring block of the same frame. Optionally, an interpolation filter of a certain type may be applied to the predicted block to blend pixels of the predicted block. Pixel values of a block can be predicted using a vector compensation process in intra-frame prediction 238 by translating a neighboring block (within the same frame) according to a vector and optionally applying an interpolation filter to the neighboring block to produce predicted samples 212. Intra-frame prediction 238 may output or identify the vector applied in generating predicted samples 212. Intra-frame prediction 238 may output or identify an interpolation filter type applied in generating predicted samples 212.

Motion estimation 234 and inter-frame prediction 236 may predict samples of a block from samples of previously encoded frames, e.g., reference frames in decoded picture buffer 232. Motion estimation 234 and inter-frame prediction 236 may perform motion compensation, which may involve identifying a suitable reference block and a suitable motion predictor (or vector) for a block and optionally an interpolation filter to be applied to the reference block. Motion estimation 234 may receive original samples 208 from partitioning 206. Motion estimation 234 may receive samples from decoded picture buffer 232 (e.g., samples of previously encoded frames or reference frames). Motion estimation 234 may use a number of reference frames for determining one or more suitable motion predictors. Motion predictors may include motion vectors that capture the movement of blocks between frames in a video. Motion estimation 234 may output or identify one or more reference frames and one or more suitable motion predictors. Inter-frame prediction 236 may apply the one or more suitable motion predictors determined in motion estimation 234 and one or more reference frames to generate predicted samples 212. The identified reference frame(s) and motion predictor(s) may be encoded in the encoded bitstream 180 to enable a decoder to reconstruct a block using the same reference frame(s) and motion predictor(s). In one codec, motion estimation 234 may implement single reference frame prediction mode, where a single reference frame with a corresponding motion predictor is used for inter-frame prediction 236. Motion estimation 234 may implement compound reference frame prediction mode where two reference frames with two corresponding motion predictors are used for inter-frame prediction 236. In one codec, motion estimation 234 may implement techniques for searching and identifying good reference frame(s) that can yield the most efficient motion predictor. The techniques in motion estimation 234 may include searching for good reference frame(s) candidates spatially (within the same frame) and temporally (in previously encoded frames). The techniques in motion estimation 234 may include searching a deep spatial neighborhood to find a spatial candidate pool. The techniques in motion estimation 234 may include utilizing temporal motion field estimation mechanisms to generate a temporal candidate pool. The techniques in motion estimation 234 may use a motion field estimation process. After temporal and spatial candidates may be ranked and a suitable motion predictor may be determined. In one codec, inter-frame prediction 236 may support a number of diverse motion predictors. Examples of predictors may include geometric motion vectors (complex, non-linear motion), warped motion compensation (affine transformations that capture non-translational object movements), overlapped block motion compensation, advanced compound prediction (compound wedge prediction, difference-modulated masked prediction, frame distance-based compound prediction, and compound inter-intra prediction), dynamic spatial and temporal motion vector referencing, affine motion compensation (capturing higher-order motion such as rotation, scaling, and sheering), adaptive motion vector resolution modes, geometric partitioning modes, bidirectional optical flow, prediction refinement with optical flow, bi-prediction with weights, extended merge prediction, etc. Optionally, an interpolation filter of a certain type may be applied to the predicted block to blend pixels of the predicted block. Pixel values of a block can be predicted using the motion predictor/vector determined in a motion compensation process in motion estimation 234 and inter-frame prediction 236 and optionally applying an interpolation filter. Inter-frame prediction 236 may output or identify the motion predictor/vector applied in generating predicted samples 212. Inter-frame prediction 236 may output or identify an interpolation filter type applied in generating predicted samples 212.

Mode selection 230 may be informed by components such as motion estimation 234 to determine whether inter-frame prediction 236 or intra-frame prediction 238 may be more efficient for encoding a block. Inter-frame prediction 236 may output predicted samples 212 of a predicted block. Inter-frame prediction 236 may output a selected predictor and a selected interpolation filter (if applicable) that may be used to generate the predicted block. Intra-frame prediction 238 may output predicted samples 212 of a predicted block. Intra-frame prediction 238 may output a selected predictor and a selected interpolation filter (if applicable) that may be used to generate the predicted block. Regardless of the mode, predicted residues 210 may be generated by subtractor 220 by subtracting original samples 208 by predicted samples 212.

Transform and quantization 214 may receive predicted residues 210. Predicted residues 210 may be generated by subtractor 220 that takes original samples 208 and subtracts predicted samples 212 to output predicted residues 210. Predicted residues 210 may be referred to as prediction error of the intra-frame prediction 238 and inter-frame prediction 236 (e.g., error between the original samples and predicted samples 212). Prediction error has a smaller range of values than the original samples and can be coded with fewer bits in encoded bitstream 180. Transform and quantization 214 may include one or more of transforming and quantizing. Transforming may include converting the predicted residues 210 from the spatial domain to the frequency domain. Transforming may include applying one or more transform kernels. Examples of transform kernels may include horizontal and vertical forms of discrete cosine transforms (DCT), asymmetrical discrete sine transform (ADST), flip ADST, and identity transform (IDTX), multiple transform selection, low-frequency non-separatable transform, subblock transform, non-square transforms, DCT-VIII, discrete sine transform VII (DST-VII), discrete wavelet transform (DWT), etc. Transforming may convert the predicted residues 210 into transform coefficients. Quantizing may quantize the transformed coefficients, e.g., by reducing the precision of the transform coefficients. Quantizing may include using quantization matrices (e.g., linear and non-linear quantization matrices). The elements in the quantization matrix can be larger for higher frequency bands and smaller for lower frequency bands, which means that the higher frequency coefficients are more coarsely quantized, and the lower frequency coefficients are more finely quantized. Quantizing may include dividing each transform coefficient by a corresponding element in the quantization matrix and rounding to the nearest integer. Effectively, the quantization matrices may implement different quantization parameters (QPs) for different frequency bands and chroma planes and can use spatial prediction. A suitable quantization matrix can be selected and signaled for each frame and encoded in encoded bitstream 180. Transform and quantization 214 may output quantized transform coefficients and syntax elements 278 that indicate the coding modes and parameters used in the encoding process implemented in encoder 102.

Inverse transform and inverse quantization 218 may apply the inverse operations performed in transform and quantization 214 to produce reconstructed predicted residues 224 as part of a reconstruction path to produce decoded picture buffer 232 for encoder 102. Inverse transform and inverse quantization 218 may receive quantized transform coefficients and syntax elements 278. Inverse transform and inverse quantization 218 may perform one or more inverse quantization operations, e.g., applying an inverse quantization matrix, to obtain the unquantized/original transform coefficients. Inverse transform and inverse quantization 218 may perform one or more inverse transform operations, e.g., inverse transform (e.g., inverse DCT, inverse DWT, etc.), to obtain reconstructed predicted residues 224. A reconstruction path is provided in encoder 102 to generate reference blocks and frames, which are stored in decoded picture buffer 232. The reference blocks and frames may match the blocks and frames to be generated in the decoder. The reference blocks and frames are used as reference blocks and frames by motion estimation 234, inter-frame prediction 236, and intra-frame prediction 238.

In-loop filter 228 may implement filters to smooth out artifacts introduced by the encoding process in encoder 102 (e.g., processing performed by partitioning 206 and transform and quantization 214). In-loop filter 228 may receive reconstructed predicted samples 226 from summer 222 and output frames to decoded picture buffer 232. Examples of filters may include constrained low-pass filter, directional deringing filter, edge-directed conditional replacement filter, loop restoration filter, Wiener filter, self-guided restoration filters, constrained directional enhancement filter, luma mapping with chroma scaling, sample adaptive offset filter, adaptive loop filter, cross-component adaptive loop filter, etc.

Entropy coding 216 may receive quantized transform coefficients and syntax elements 278 (e.g., referred to herein as symbols) and perform entropy coding. Entropy coding 216 may generate and output encoded bitstream 180. Entropy coding 216 may exploit statistical redundancy and apply lossless algorithms to encode the symbols and produce a compressed bitstream, e.g., encoded bitstream 180. Entropy coding 216 may implement some version of arithmetic coding. Different versions may have different pros and cons. In one codec, entropy coding 216 may implement (symbol to symbol) adaptive multi-symbol arithmetic coding. In another codec, entropy coding 216 may implement context-based adaptive binary arithmetic coder (CABAC). Binary arithmetic coding differs from multi-symbol arithmetic coding. Binary arithmetic coding encodes only a bit at a time, e.g., having either a binary value of 0 or 1. Binary arithmetic coding may first convert each symbol into a binary representation (e.g., using a fixed number of bits per-symbol). Handling just binary value of 0 or 1 can simplify computation and reduce complexity. Binary arithmetic coding may assign a probability to each binary value (e.g., a chance of the bit having a binary value of 0 and a chance of the bit having a binary value of 1). Multi-symbol arithmetic coding performs encoding for an alphabet having at least two or three symbol values and assigns a probability to each symbol value in the alphabet. Multi-symbol arithmetic coding can encode more bits at a time, which may result in a fewer number of operations for encoding the same amount of data. Multi-symbol arithmetic coding can require more computation and storage (since probability estimates may be updated for every element in the alphabet). Maintaining and updating probabilities (e.g., cumulative probability estimates) for each possible symbol value in multi-symbol arithmetic coding can be more complex (e.g., complexity grows with alphabet size). Multi-symbol arithmetic coding is not to be confused with binary arithmetic coding, as the two different entropy coding processes are implemented differently and can result in different encoded bitstreams for the same set of quantized transform coefficients and syntax elements 278.

As discussed herein, encoder 102 may be modified to implement operations as illustrated in FIGS. 4, 10, and 12. Encoder 102 may implement operations relating to subblock adaptive interpolation filtering techniques illustrated in FIGS. 4, 6-10, and 12.

### Video encoder

FIG. 3 illustrates decoder 1 162₁ to decode an encoded bitstream and output a decoded video, according to some embodiments of the disclosure. Decoder 1 162₁ may include one or more of: signal processing operations and data processing operations, including entropy decoding, inverse transform, inverse quantization, inter and intra-frame prediction, in-loop filtering, etc. Decoder 1 162₁ may have signal and data processing operations that mirror the operations performed in the encoder. Decoder 1 162₁ may apply signal and data processing operations that are signaled in encoded bitstream 180 to reconstruct the video. Decoder 1 162₁ may receive encoded bitstream 180 and generate and output decoded video 168₁ having a plurality of video frames. The decoded video 168₁ may be provided to one or more display devices for display to one or more human viewers. Decoder 1 162₁ may include one or more of entropy decoding 302, inverse transform and inverse quantization 218, in-loop filter 228, inter-frame prediction 236, and intra-frame prediction 238. Some of the functionalities are previously described and used in the encoder, such as encoder 102 of FIG. 2.

Entropy decoding 302 may decode the encoded bitstream 180 and output symbols that were coded in the encoded bitstream 180. The symbols may include quantized transform coefficients and syntax elements 278. Entropy decoding 302 may reconstruct the symbols from the encoded bitstream 180.

Inverse transform and inverse quantization 218 may receive quantized transform coefficients and syntax elements 278 and perform operations which are performed in the encoder. Inverse transform and inverse quantization 218 may output reconstructed predicted residues 224. Summer 222 may receive reconstructed predicted residues 224 and predicted samples 212 and generate reconstructed predicted samples 226. Inverse transform and inverse quantization 218 may output syntax elements 278 having signaling information for informing/instructing/controlling operations in decoder 1 162₁ such as mode selection 230, intra-frame prediction 238, inter-frame prediction 236, and in-loop filter 228.

Depending on the prediction modes signaled in the encoded bitstream 180 (e.g., as syntax elements in quantized transform coefficients and syntax elements 278), intra-frame prediction 238 or inter-frame prediction 236 may be applied to generate predicted samples 212.

Summer 222 may sum predicted samples 212 of a decoded reference block and reconstructed predicted residues 224 to produce reconstructed predicted samples 226 of a reconstructed block. For intra-frame prediction 238, the decoded reference block may be in the same frame as the block that is being decoded or reconstructed. For inter-frame prediction 236, the decoded reference block may be in a different (reference) frame in decoded picture buffer 232.

Intra-frame prediction 238 may apply a predictor or vector (e.g., in accordance with signaled predictor information) to the reconstructed block, which may be generated using a decoded reference block of the same frame. Intra-frame prediction 238 may apply a suitable interpolation filter type (e.g., in accordance with signaled interpolation filter information) to the reconstructed block to generate predicted samples 212.

Inter-frame prediction 236 may apply a predictor or vector (e.g., in accordance with signaled predictor information) to a reconstructed block, which may be generated using a decoded reference block of a different frame from decoded picture buffer 232. Inter-frame prediction 236 may apply a suitable interpolation filter type (e.g., in accordance with signaled interpolation filter information) to the reconstructed block to generate predicted samples 212.

In-loop filter 228 may receive reconstructed predicted samples and output decoded video 168₁.

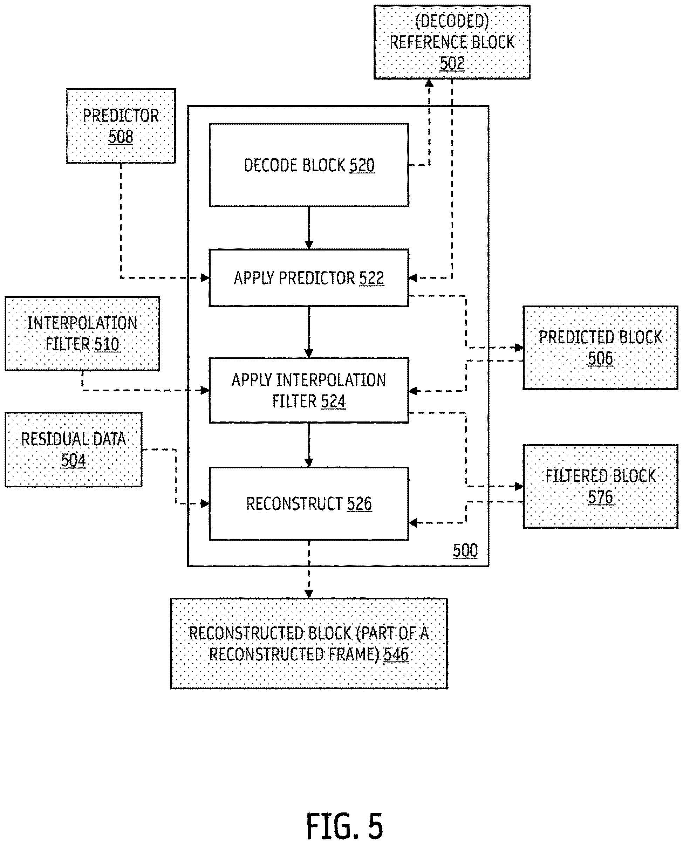

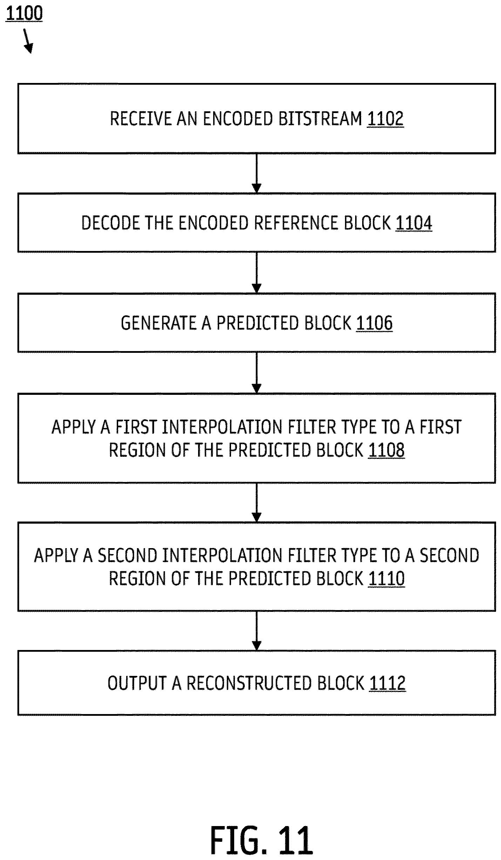

As discussed herein, decoder 1 162₁ (and other decoders) may be modified to implement operations as illustrated in FIGS. 5 and 11. Decoder 1 162₁ (and other decoders) may implement operations relating to subblock adaptive interpolation filtering techniques illustrated in FIGS. 5-9 and 11.

### Block-prediction in inter-frame prediction and intra-frame prediction

As described with FIGS. 2-3, intra-frame prediction 238 and/or inter-frame prediction 236 in an encoder may implement some form of prediction based on a reference block. Intra-frame prediction 238 and/or inter-frame prediction 236 may optionally apply an interpolation filter type to the block to blend the pixels in the predicted block. Intra-frame prediction 238 may exploit spatial redundancy to encode a block and utilize a reference block that is in the same frame. Inter-frame prediction 236 may exploit temporal redundancy to encode a block and utilize a reference block that is in a different frame.

FIG. 4 illustrates a process 400 for encoding a block of a frame, according to some embodiments of the disclosure. An encoder may implement process 400. Process 400 may encode original block 404. Original block 404 may include a block of pixels or samples (e.g., luma samples, chroma samples, etc.). Original block 404 may originate from an original, uncompressed video frame of an uncompressed video. Goal of process 400 is to compress original block 404 (e.g., a current block to be encoded) to generate encoded video data that can be used by a decoder to reconstruct original block 404 as closely as possible (e.g., to achieve as little loss in visual quality as possible) while utilizing fewer bits than the bits of original block 404 (e.g., to achieve compression).

In find reference block and predictor 406, a searching process may be implemented in the encoder to find a suitable reference block and a suitable predictor that can be used to predict original block 404 from the reference block. Find reference block and predictor 406 may receive original block 404 and one or more options for reference blocks and one or more options for predictors. Find reference block and predictor 406 may determine suitable reference block and predictor 402 for original block 404. Suitability may depend on available options for reference blocks and available options for predictors. Suitability may depend on whether a reference block and a predictor may yield a best or desired match with original block 404.

In determine interpolation filter 408, a selection process may be implemented to in the encoder to determine a suitable interpolation filter type to be applied to reference block. Determine interpolation filter 408 may receive original block 404 and reference block and predictor 402. Determine interpolation filter 408 may determine interpolation filter 482. Suitability may depend on available options for interpolation filter types. Suitability may depend on whether an interpolation filter type may achieve the best or desired visual quality. Suitability may depend on whether an interpolation filter type yield a best or desired match with original block 404.

In some cases, determine interpolation filter 408 may occur before find reference block and predictor 406. In some cases, determine interpolation filter 408 may occur after find reference block and predictor 406. In some cases, determine interpolation filter 408 may occur at the same time as find reference block and predictor 406 (or in parallel). In some cases, determine interpolation filter 408 may be combined with find reference block and predictor 406 (e.g., performing a searching or selection process that determines a predictor in reference block and predictor 402 having a transformation operation that includes prediction and interpolation filtering).

In determine residual data 410, the predictor found in find reference block and predictor 406 may be applied to the reference block found in find reference block and predictor 406 to produce a predicted reference block. In determine residual data 410, the interpolation filter type determined in determine interpolation filter 408 may be applied to the predicted reference block to produce a filtered predicted reference block. In determine residual data 410, residual data 492 may be determined by differencing original block 404 and the filtered predicted reference block. Determine residual data 410 may receive original block 404 and reference block and predictor 402, and interpolation filter 482. Determine residual data 410 may determine and output residual data 492.

In encode block 412, original block 404 is encoded. Encode block 412 may receive reference block and predictor 402, interpolation filter 482, and residual data 492. Encode block 412 may produce encoded block 460 that encodes original block 404 (in a compressed form). Encode block 412 may encode original block 404 using syntax elements that signal or identify the reference block and predictor 402, the interpolation filter 482. Encode block 412 may encode original block 404 by applying a transform to residual data 492. Encode block 412 may apply other operations discussed with transform and quantization 214 and entropy coding 216 of FIG. 2 to produce encoded data in encoded block 460.

FIG. 5 illustrates a process 500 for decoding a block of a frame, according to some embodiments of the disclosure. A decoder may implement process 500. Process 500 may decode an encoded block (e.g., produced by process 400 of FIG. 4). Encoded block may include information for one or more of: reference block 502, predictor 508, interpolation filter 510, and residual data 504. Reference block 502, predictor 508, interpolation filter 510, and residual data 504 may be extracted from an encoded bitstream by performing operations discussed with entropy decoding 302 and inverse transform and inverse quantization 218 of FIG. 3. Goal of process 500 is to reconstruct or recover an original block of a frame from encoded data.

In decode block 520, encoded data of reference block 502 may be decoded into a block of pixel data. Decode block 520 may receive the encoded data of reference block 502, or an encoded reference block. Decode block 520 may output a (decoded) reference block 502 as a block of pixel data.

In apply predictor 522, predictor 508 may be applied to (decoded) reference block 502. Apply predictor 522 may receive predictor 508 and (decoded) reference block 502. Apply predictor 522 may output predicted block 506.

In apply interpolation filter 524, interpolation filter 510 may be applied to predicted block 506. Apply interpolation filter 524 may receive predicted block 506 and interpolation filter 510. Apply interpolation filter 524 may output filtered block 576.

In some cases, apply interpolation filter 524 may occur before apply predictor 522. In some cases, apply interpolation filter 524 may occur after apply predictor 522. In some cases, apply interpolation filter 524 may occur at the same time apply predictor 522 (or in parallel). In some cases, apply interpolation filter 524 and apply predictor 522 may be combined (e.g., applying a predictor 508 having a transformation operation that includes prediction and interpolation filtering).

In reconstruct 526, a reconstructed block 546 (e.g., part of a reconstructed frame) can be recovered or reconstructed from encoded data of a block. Reconstructed block 546 may include a block of pixels data, and can be used to reconstruct a part of a reconstructed frame of a video. Reconstruct 526 may receive filtered block 576 and residual data 504. Reconstruct 526 may add residual data 504 to filtered block 576. Reconstruct 526 may output reconstructed block 546 based on filtered block 576 and residual data 504.

### Exemplary adaptive subblock interpolation filtering techniques in encoding and decoding

Adaptive subblock interpolation filtering can be applied in the motion compensation of a block of luminance and/or chrominance samples during the video encoding and/or decoding process. Adaptive subblock interpolation filtering involves determining interpolation filter information that may indicate different interpolation filter types being applied to different regions, areas, or parts of a block. For example, interpolation filter information in an encoded bitstream may indicate a first interpolation filter type for a first region of a predicted block, and a second interpolation filter type for a second region of the predicted block that is different from the first interpolation filter type.

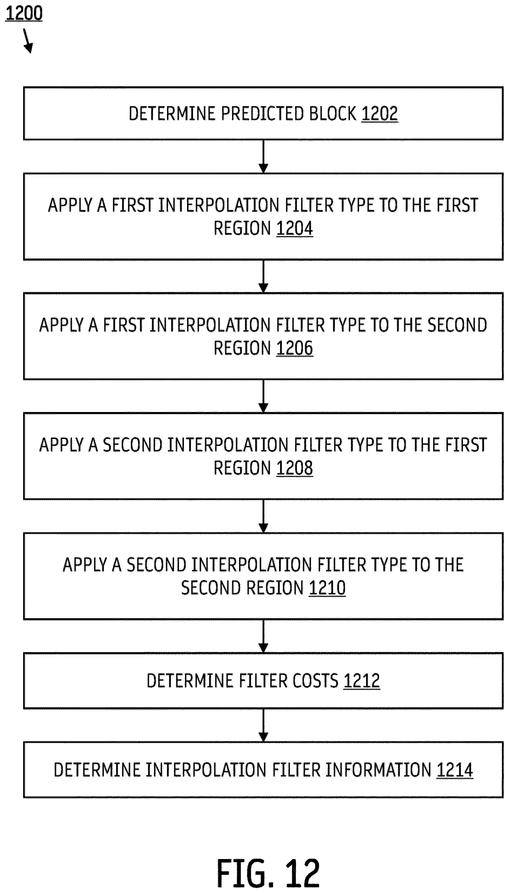

In the context of FIG. 4, adaptive subblock interpolation filter techniques can augment determine interpolation filter 408 of encoding process 400. Exemplary procedures for determine interpolation filter 408 are illustrated in FIGS. 10 and 12. The determined interpolation filter 482 may include multiple, different interpolation filter types being applied to different regions, areas, or parts of a predicted reference block.

In the context of FIG. 5, adaptive subblock interpolation filter techniques can augment apply interpolation filter 524 of decoding process 500. Exemplary procedures for apply interpolation filter 524 are illustrated in FIG. 11. The interpolation filter 510 may include multiple, different interpolation filter types being applied to different regions, areas, or parts of a predicted block.

### Exemplary partition shapes that divide a block into one or more regions, areas, or parts

Adaptive subblock interpolation filtering may allow the video encoder to select, (1) a partition shape among a set of predefined partition shapes, (2) for each partition of the selected partition shape, an interpolation filter type among a set of filter type options. In some cases, adaptive subblock interpolation filtering may allow the video encoder to select an interpolation filter type among a set of interpolation filter type options. The interpolation filter type options may include one or more single interpolation filter type options. A single interpolation filter type may specify applying a same interpolation filter type to an entire block. The interpolation filter type options may include one or more multiple interpolation filters type options. A multiple interpolation filters type may specify applying different interpolation filter types to different regions/areas/parts of a block.

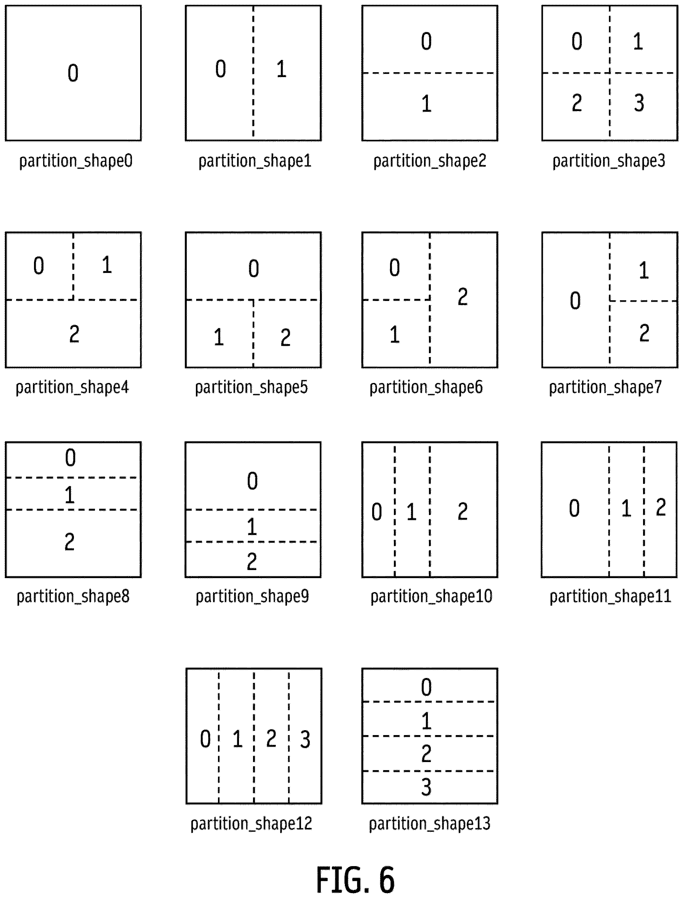

FIG. 6 illustrates exemplary partition shapes, according to some embodiments of the disclosure. While square blocks are illustrated, it is understood that blocks may be rectangular. The exemplary partition shapes illustrate different manners for dividing a block (of pixel data) into different regions, areas, or parts. FIG. 6 illustrates 14 different partition shapes, e.g., partition_shape0, partition_shape1, partition_shape2, partition_shape3, partition_shape4, partition_shape5, partition_shape6, partition_shape7, partition_shape8, partition_shape9, partition_shape10, partition_shape11, partition_shape12, and partition_shape13.

In some embodiments, a block may include a single region. In some embodiments, a block may have multiple regions, e.g., a first region and a second region.

In some cases, the first region can include a top half of the decoded reference block, and the second region can include a bottom half of the decoded reference block. An example is illustrated as partition_shape2.

In some cases, the first region can include a left half of the decoded reference block, and the second region can include a right half of the decoded reference block. An example is illustrated as partition_shape1.

In some cases, the first region can include a first third part of the decoded reference block, and the second region can include a second third part of the decoded reference block.

In some cases, the first region can include a first quarter part of the decoded reference block, and the second region can include a second quarter part of the decoded reference block. Examples are illustrated as partition_shape3, partition_shape4, partition_shape6, partition_shape7, partition_shape8, partition_shape9, partition_shape10, partition_shape11, partition_shape12, partition_shape13.

partition_shape0 has a region that includes the entire block (undivided). partiion_shape1 has two half regions dividing vertically. partition_shape2 has two half regions divided horizontally. patition_shape3 has four quarter regions. patition_shape4 has one half region and two quarter regions. patition_shape5 has one half region and two quarter regions. patition_shape6 has one half region and two quarter regions. patition_shape7 has one half region and two quarter regions. patition_shape8 has one half region and two quarter regions. patition_shape9 has one half region and two quarter regions. patition_shape10 has one half region and two quarter regions. patition_shape11 has one half region and two quarter regions. patition_shape12 has four quarter regions. patition_shape14 has four quarter regions.

### Exemplary interpolation filter information

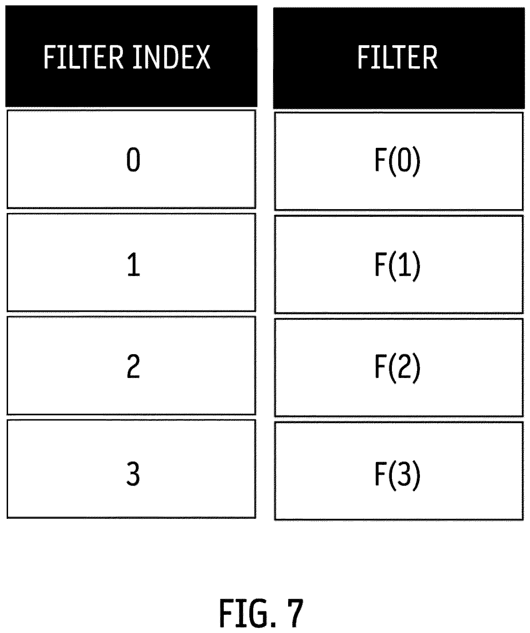

FIG. 7 illustrates an example of a filter set, according to some embodiments of the disclosure. As an example, FIG. 7 illustrates four different interpolation filter types, e.g., F(0), F(1), F(2), and F(3). A filter set may have a plurality of different interpolation filter types. A filter index may indicate one of the different interpolation filter types in the filter set. Interpolation filter information in an encoded bitstream may include a filter index.

The indexes of the block partition shape and the filter type(s) may be signaled in the bitstream as interpolation filter information to be used by the decoder (e.g., in the motion compensation process or block-prediction process) to reconstruct the luminance and/or chrominance sample. Interpolation filter information in an encoded bitstream may include a partition shape index and one or more filter indices. The partition shape index may indicate a manner to divide a block into one or more regions, e.g., at least a first region and a second region. The one or more filter indices may individually indicate an interpolation filter type, e.g., the first interpolation filter type being applied to the first region and a second interpolation filter type being applied to the second region. The one or more filter indices may be in the form of a list or an array.

In some embodiments, the decoder may read the compressed bitstream generated by the encoder. The decoder may determine, from the compressed bitstream, a partition shape index that indicates the partition shape, e.g., a particular way to divide the block into subblocks (e.g., regions, areas, or parts). The partition shape index may indicate one of the partition shapes illustrated in FIG. 6. The decoder may determine, from the compressed bitstream, a filter index that indicates a particular interpolation filter type for each subblock (e.g., regions, areas, or parts). The decoder may apply the corresponding filter type indicated by the filter index, to the corresponding subblock created using the partition shape indicated by the partition shape index.

For example, the decoder may read from the compressed bitstream in the interpolation filter information that the partition shape index equals to 2. The partition shape index may correspond to a partition shape that horizontally splits a block into a top horizontal half region or subblock and a bottom horizontal half region or subblock (e.g., as depicted by partition_shape2 in FIG. 6). The decoder may read from the compressed bitstream in the interpolation filter information a first filter index indicating the interpolation filter type for the top horizontal half region and a second filter index indicating the interpolation filter type for the bottom horizontal half region. The decoder may apply the interpolation filter type corresponding to the first filter index to the top horizontal half region. The decoder may apply the interpolation filter type corresponding to the second filter index to the bottom horizontal half region.

In some embodiments, an approach to signaling the use of adaptive subblock interpolation filtering in the video decoding process is to add a signal (e.g., *seq_sub_interpolation_is_allowed*) in the encoded bitstream, e.g., in a sequence header. The signal can indicate whether the use of adaptive subblock filtering is allowed in the entire video sequence. If this signal is set to, e.g., 1, then the encoder can use the method for any picture in the sequence.

In some embodiments, the interpolation filter information in an encoded bitstream may include a sequence header signal to indicate whether multiple interpolation filter types are allowed for a given block of a sequence of frames. In other words, the sequence header signal may indicate whether a given block in a sequence of frames may have different interpolation filter types to be applied to different regions of the given block.

In some cases, if the encoder can use the method for any frame/picture/slice in the sequence, then another signal (e.g., *pic_sub_interpolation_is_allowed*) can be added to encoded bitstream as interpolation filter information, e.g., in a frame/picture/slice header. This signal in the frame/picture/slice header may further specify whether the use of adaptive subblock filtering is allowed for the current frame, picture, or slice. In some cases, *pic_sub_interpolation_is_allowed* may be added to a frame/picture/slice/header even if *seq_sub_interpolation_is_allowed* is not used for the sequence.

In some embodiments, the interpolation filter information in an encoded bitstream may include a frame header signal to indicate whether multiple interpolation filter types are allowed for a given block of a frame. In other words, the sequence header signal may indicate whether a given block in a frames may have different interpolation filter types to be applied to different regions of the given block.

A signal (e.g., *sub_interpolation_allowed_block_sizes[])* can be added to the encoded bitstream as interpolation filter information indicating for which block sizes adaptive subblock interpolation filtering is allowed. This signal can include an array of binary values, with one element for each possible block size. For example, a value of 1 for a particular block size may indicate that the adaptive subblock filtering method is allowed for that size, while a value of 0 may indicate that it is not allowed. The signal may include a plurality of binary values corresponding to different block sizes. In some cases, the signal, *sub_interpolation_allowed_block_sizes[],* may be combined with the frame header signal, *pic_sub_interpolation_is_allowed.* In some cases, the signal, *sub_interpolation_allowed_block_sizes[],* may be combined with the sequence header signal, *seq_sub_interpolation_is_allowed.*

In some embodiments, the interpolation filter information in an encoded bitstream may include a block size signal to indicate one or more block sizes for which multiple interpolation filter types is allowed, and one or more further block sizes for which multiple interpolation filter types is disallowed. The block size signal may be included with other sequence-level signaling. The block size signal may be included with other frame-level signaling.

At the block level, for each block in the frame, picture, or slice that is allowed to use this adaptive subblock interpolation filtering approach, one or more signals may be added to the block header (e.g., *partition_shape* and *filter_type[]*)*.* The *partition_shape* signal may specify the shape of the partition to be used for that block and can take on values from the set of partition shapes options that the encoder can choose from. The *filter_type[]* signal may specify the interpolation filter type to be used for each subblock (e.g., region, area, or part) within the block and can take on values from the set of interpolation filter types options that the encoder can choose from. Exemplary interpolation filter types options are illustrated in FIGS. 6-7.

At the decoder, the following operations may be performed:
1. The decoder may read the sequence header signal (e.g., *seq_sub_interpolation_is_allowed*) and may determine whether adaptive subblock interpolation filtering is allowed for the (entire) video sequence.
2. If the signal in the sequence header allows for adaptive subblock interpolation filtering, for each frame, picture, or slice, the decoder may read the frame/picture/slice header signal (e.g., *pic_sub_interpolation_is_allowed[]*) and determines whether adaptive subblock interpolation filtering is allowed for the current frame, picture, or slice.
3. The decoder may further read a block size signal (e.g., *sub_interpolation_allowed_block_sizes[]*) to determine for which block sizes adaptive subblock interpolation filtering is allowed.
4. If the signal in the frame/picture/slice header allows for adaptive subblock interpolation filtering, for each block in the frame/picture/slice with a size that is allowed to use the adaptive interpolation technique, the decoder may read the block header signals (e.g., *partition_shape* and *filter_type[]*) and may determine the partition shape to be used for that block and the interpolation filter type to be used for each subblock (e.g., region, area, or part) within the block.
5. For each block that allows for adaptive subblock interpolation filtering, the decoder may apply the selected partition shape and interpolation filter type indicated by, e.g., the *partition_shape* signal and the *filter_type[]* signal respectively, to perform subblock filtering on the block's luminance and/or chrominance samples during the motion compensation process or block-prediction process. Otherwise, for each block that does not allow for adaptive subblock filtering, the decoder may apply a single or default interpolation filter for the whole block during the motion compensation process or block-prediction process.

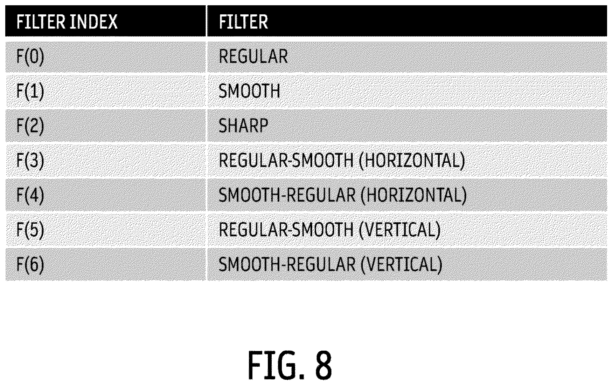

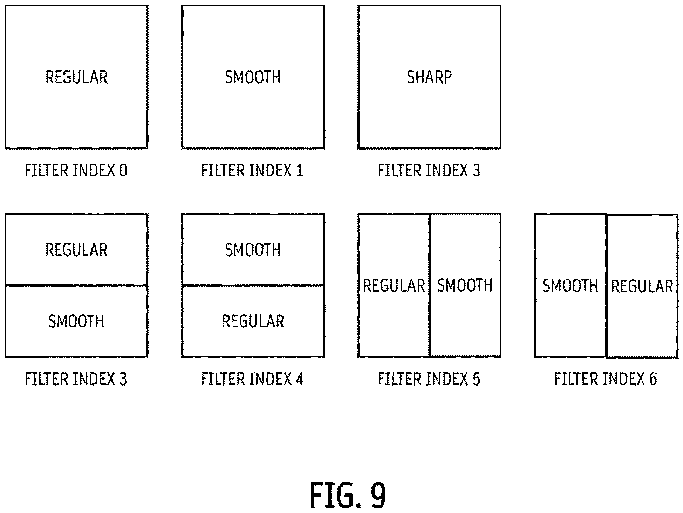

FIG. 8 illustrates another example of a filter set, according to some embodiments of the disclosure. FIG. 9 depicts the filter set in FIG. 8, according to some embodiments of the disclosure. As an example, FIGS. 8-9 illustrates 7 different interpolation filter type options, e.g., F(0), F(1), F(2), F(3), F(4), F(5), F(6), and F(7). The different interpolation filter type options can be signaled using corresponding filter indices. The different interpolation filter type options may include one or more options that each indicate applying a same interpolation filter type to the entire block. The different interpolation filter type options may include one or more options that each indicate applying different interpolation filter types to different regions/areas/parts of the block. Rather than separately signaling the partition type and the one or more interpolation filter types to be applied to one or more regions, areas, or parts of a block, the illustrated interpolation filter type options signals both how the block is partitioned into one or more regions, areas, or parts of a block and which interpolation filter type to apply to each one of the one or more regions, areas, or parts of a block. This manner of signaling both the partition shape and the corresponding interpolation filter types together may result in fewer options and variability, but this manner of signaling can require fewer bits than signaling the partition shape and the filter indices separately.

Filter index 0, F(0), may indicate a regular interpolation filter type to be applied to the entire block. Filter index 1, F(1), may indicate a smooth interpolation filter type to be applied to the entire block. Filter index 2, F(2), may indicate a sharp interpolation filter type to be applied to the entire block. Filter index 3, F(3), may indicate a regular interpolation filter type to be applied to a top half region of the block and a smooth interpolation filter type to be applied to a bottom half region of the block. Filter index 4, F(4), may indicate a smooth interpolation filter type to be applied to a top half region of the block and a regular interpolation filter type to be applied to a bottom half region of the block. Filter index 5, F(5), may indicate a regular interpolation filter type to be applied to a left half region of the block and a smooth interpolation filter type to be applied to a right half region of the block. Filter index 6, F(6), may indicate a smooth interpolation filter type to be applied to a left half region of the block and a regular interpolation filter type to be applied to a right half region of the block.

At the block level, for each block in the frame, picture, or slice that is allowed to use this adaptive subblock interpolation filtering approach, one or more signals may be added to the block header (e.g., *filter_type*).The *filter_type* signal may specify the interpolation filter type option to be used for the block and can take on values from the set of interpolation filter types options that the encoder can choose from. An interpolation filter type option may involve applying different interpolation filter types to different regions, areas, or parts of a block. Exemplary interpolation filter types options are illustrated in FIGS. 8-9.

At the decoder, the following operations may be performed:
1. For each block in the frame/picture/slice, the decoder may read the block header signals (e.g., *filter_type*) and may determine the interpolation filter type option to be used for the block. An interpolation filter type option may involve applying different interpolation filter types to different regions, areas, or parts of a block.
2. For each block in the frame/picture/slice, the decoder may apply the interpolation filter type option indicated by, e.g., the *filter_type* signal respectively. The decoder may perform subblock filtering on the block's luminance and/or chrominance samples during the motion compensation process or block-prediction process, if the interpolation filter type indicates subblock filtering.

In some embodiments, the interpolation filter type signaling may be implemented to further reduce the number of bits that may be needed to indicate appropriate adaptive subblock interpolation filtering. In some embodiments, the interpolation filter information may include a signal to indicate that the interpolation filter information is the same as a further (or previous/adjacent reconstructed block). In some embodiments, the interpolation filter information may include a filter index residual signal to indicate a residual filter index value relative to a filter index of a further reconstructed block.

### Exemplary encoder implementation for adaptive subblock interpolation filtering in an encoder

FIG. 10 illustrates an example of partition shape and filter types selection process 1000, according to some embodiments of the disclosure. The process 1000 may be implemented in an encoder.

In a block-prediction operation, for each interpolation filter type, an encoder may generate a motion compensated block (or predicted block) using a selected reference block and a selected predictor. The encoder may generate a predicted block using motion compensation or block-prediction. The encoder may determine a predicted block based on a reference block and a predictor, wherein the predicted block has at least a first region and a second region. The encoder may determine the reference block and the predictor for an original block or source block. The predicted block may have more regions. As depicted, for purposes of evaluating filter costs, the predicted block has four quarter regions.

In a filtering operation, the encoder may apply a specific interpolation filter type to the predicted block to produce a filtered predicted block. Examples of interpolation filter types may include a low-pass filter, a high-pass filter, or some other type of interpolation filter type. Different interpolation filter types, e.g., F(0), F(1), F(2), ..., and F(n), may be applied to produce different filtered predicted blocks, e.g., B(0), B(1), B(2), ..., and B(n). The encoder may apply a first interpolation filter type to the first region of the predicted block to obtain a first region of a first filtered predicted block (e.g., a first region of B(0)). The encoder may apply the first interpolation filter type to the second region of the predicted block to obtain a second region of the first filtered predicted block (e.g., a second region of B(0)). The encoder may apply a second interpolation filter type to the first region of the predicted block to obtain a first region of a second filtered predicted block (e.g., a first region of B(1)). The encoder may apply the second interpolation filter type to the second region of the predicted block to obtain a second region of the second filtered predicted block (e.g., a second region of B(1).

For each subblock (e.g., region, area, or part of a block), the encoder may perform one or more of: distortion calculation, filter rate estimation, filter cost computation, in determine filter costs 1002. For each subblock, the encoder may utilize the filter costs determined to select the best interpolation filter type option (including the subblock partition shape and different interpolation filter types being applied to the subblocks) in select the best filter type 1004.

The encoder may determine filter costs based on the original block, the first region of the first filtered predicted block, the second region of the first filtered predicted block, the first region of the second filtered predicted block, and the second region of the second filtered predicted block. Based on the filter costs, the encoder may determine interpolation filter information for encoding the predicted block (e.g., the block the predicted block is intended to predict).

Distortion calculation may include calculating the difference between the original or source video block, e.g., depicted as S, and each filtered reference block generated in the first operation, e.g., B(0), B(1), B(2), ..., or B(n). This difference may be referred to as the distortion or distortion cost. For a filtered predicted block, e.g., B(0), subblock-based distortion may be obtained by subtracting the original video block, S, with the filtered predicted block, e.g., B(0), to obtain different distortion costs for the subblocks, e.g., D0(0), D0(1), D0(2), and D0(3). The distortion costs for the subblocks relate to the distortion caused by the particular interpolation filter type applied to obtain the filtered predicted block, e.g., B(0). For a filtered predicted block, e.g., B(1), subblock-based distortion may be obtained by subtracting the original video block, S, with the filtered predicted block, e.g., B(1), to obtain different distortion costs for the subblocks, e.g., D1(0), D1(1), D1(2), and D1(3). The distortion costs for the subblocks relate to the distortion caused by the particular interpolation filter type applied to obtain the filtered predicted block, e.g., B(1). For a filtered predicted block, e.g., B(n), subblock-based distortion may be obtained by subtracting the original video block, S, with the filtered predicted block, e.g., B(n), to obtain different distortion costs for the subblocks, e.g., Dn(0), Dn(1), Dn(2), and Dn(3). The distortion costs for the subblocks relate to the distortion caused by the particular interpolation filter type applied to obtain the filtered predicted block, e.g., B(n). A total distortion cost for a particular interpolation filter type option can be calculated based on a sum or combination of the corresponding subblock-based distortion costs. The corresponding subblock-based distortion costs for the particular interpolation filter type option would include a set of subblock-based distortion costs associated with applying a specific interpolation filter type to a specific subblock in accordance with the particular interpolation filter type option. In some cases, the particular interpolation filter type option may apply different interpolation filter types to different subblocks, or in other words, apply adaptive subblock interpolation filtering.

The encoder may determine a first distortion cost, e.g., D0(0), based on the first region of the first filtered predicted block and the original block. The encoder may determine a second distortion cost, e.g., D0(1), based on the second region of the first filtered predicted block and the original block. The encoder may determine a third distortion cost, e.g., D1(0), based on the first region of the second filtered predicted block and the original block. The encoder may determine a fourth distortion cost, e.g., D2(0), based on the second region of the second filtered predicted block and the original block. Additional distortion costs may be determined as illustrated in FIG. 10.

Filter rate estimation may include estimating the number of bits that may be used to signal the interpolation filter type being used in the bitstream. Filter rate estimation may include determining signaling costs for signaling different interpolation filter types. Estimating the number of bits to be used can allow the video encoder to balance the quality of the video with the number of bits being used to encode it. The determination and minimization of signaling cost may be performed at the frame-level, e.g., determining signaling costs for an entire frame. The determination and minimization of signaling cost may be performed at the sequence-level, e.g., determining signaling costs for an entire sequence of frames.

The encoder may determine a first signaling cost for a first option for the interpolation filter information that indicates different interpolation filter types for the predicted block. The encoder may determine a second signaling cost for a second option for the interpolation filter information that indicates a single interpolation filter type for the predicted block.

Determine filter costs 1002 may include calculating the cost of each filter by taking into account the distortion and filter rate estimated in distortion calculation and filter rate estimation respectively. The cost of each filter may include a weighted sum of the distortion cost and signaling cost. The encoder may determine a first filter cost of the filter costs based on a first distortion cost and a first signaling cost for a first option for the interpolation filter information. The encoder may determine a second filter cost of the filter costs based on a second distortion cost and a second signaling cost for a second option for the interpolation filter information.

Selecting the best filter type 1004 may include, based on the filter cost calculation, selecting the best filter type to use for the different subblocks of a block. Selecting the best filter type 1004 may include, based on the filter cost calculation, selecting a interpolation filter type option to use for the block. Selecting the best filter type 1004 may include, based on the filter cost calculation, selecting a partition shape option and one or more interpolation filter types to apply to the subblocks of a block. The encoder may reconstruct the cost of each partition shape and select the best partition shape that provides the lowest cost. The encoder may determining an optimal filter cost in the filter costs. The encoder may determine the interpolation filter information that corresponds to an optimal filter cost. The encoder may signal the selected interpolation filter type option in the bitstream, so that the decoder can use them in the motion compensation process or block-prediction process during video playback. The encoder may signal the selected block partition shape and filter type(s) in the bitstream, so that the decoder can use them in the motion compensation process or block-prediction process during video playback.

### Methods utilizing adaptive subblock-based interpolation filtering

FIG. 11 depicts a flow diagram of an exemplary method 1100 for decoding an encoded bitstream, according to some embodiments of the disclosure. Method 1100 may be implemented in a decoder as described and illustrated herein. Method 1100 may illustrate an example of process 500 in FIG. 5. Method 1100 may be carried out by computing device 1300 of FIG. 13.

In 1102, a decoder may receive an encoded bitstream. The encoded bitstream can include an encoded reference block, interpolation filter information, and residual data for an encoded block. The interpolation filter information can indicate a first interpolation filter type for a first region of a predicted block and a second interpolation filter type for a second region of the predicted block that is different from the first interpolation filter type.

In 1104, the decoder may decode the encoded reference block, e.g., to obtain a decoded reference block.

In 1106, the decoder may generate the predicted block based on the decoded reference block.

In 1108, the decoder may apply the first interpolation filter type to the first region of the predicted block to obtain a first region of a filtered block.

In 1110, the decoder may apply the second interpolation filter type to the second region of the predicted block to obtain a second region of the filtered block.

In 1112, the decoder may output a reconstructed block of a reconstructed frame based on the filtered block and the residual data.

In some embodiments, the encoded bitstream further comprises predictor information indicating a predictor. The decoder may generate a predicted block by applying the predictor to the decoded reference block.

In some embodiments, method 1100 may be used for intra-frame prediction. The decoded reference block and the reconstructed block are both in the reconstructed frame.

In some embodiments, method 1100 may be used for inter-frame prediction. The decoded reference block may be a part of a reference frame. The reference frame and the reconstructed frame can have different frame indices. The reference frame and the reconstructed frame are different frames of a video.

FIG. 12 depicts a flow diagram of an exemplary method 1200 for encoding a video, according to some embodiments of the disclosure. Method 1200 may be implemented in an encoder as described and illustrated herein. Method 1200 may illustrate an example of process 400 in FIG. 4. Method 1200 may be carried out by computing device 1300 of FIG. 13.

In 1202, an encoder may determine a predicted block based on a reference block and a predictor. The predicted block has at least a first region and a second region.

In 1204, the encoder may apply a first interpolation filter type to the first region of the predicted block to obtain a first region of a first filtered predicted block.

In 1206, the encoder may apply the first interpolation filter type to the second region of the predicted block to obtain a second region of the first filtered predicted block.

In 1208, the encoder may apply a second interpolation filter type to the first region of the predicted block to obtain a first region of a second filtered predicted block.

In 1210, the encoder may apply the second interpolation filter type to the second region of the predicted block to obtain a second region of the second filtered predicted block.

In 1212, the encoder may determine filter costs based on the original block, the first region of the first filtered predicted block, the second region of the first filtered predicted block, the first region of the second filtered predicted block, and the second region of the second filtered predicted block.

In 1214, the encoder may determine interpolation filter information for encoding the predicted block based on the filter costs. The encoder may write the interpolation filter information into an encoded bitstream.

### Exemplary computing device

FIG. 13 is a block diagram of an apparatus or a system, e.g., an exemplary computing device 1300, according to some embodiments of the disclosure. One or more computing devices 1300 may be used to implement the functionalities described with the FIGS. and herein. A number of components are illustrated in the FIGS. can be included in the computing device 1300, but any one or more of these components may be omitted or duplicated, as suitable for the application. In some embodiments, some or all of the components included in the computing device 1300 may be attached to one or more motherboards. In some embodiments, some or all of these components are fabricated onto a single system on a chip (SoC) die. Additionally, in various embodiments, the computing device 1300 may not include one or more of the components illustrated in FIG. 13, and the computing device 1300 may include interface circuitry for coupling to the one or more components. For example, the computing device 1300 may not include a display device 1306, and may include display device interface circuitry (e.g., a connector and driver circuitry) to which a display device 1306 may be coupled. In another set of examples, the computing device 1300 may not include an audio input device 1318 or an audio output device 1308 and may include audio input or output device interface circuitry (e.g., connectors and supporting circuitry) to which an audio input device 1318 or audio output device 1308 may be coupled.

The computing device 1300 may include a processing device 1302 (e.g., one or more processing devices, one or more of the same type of processing device, one or more of different types of processing device). The processing device 1302 may include electronic circuitry that process electronic data from data storage elements (e.g., registers, memory, resistors, capacitors, quantum bit cells) to transform that electronic data into other electronic data that may be stored in registers and/or memory. Examples of processing device 1302 may include a central processing unit (CPU), a graphical processing unit (GPU), a quantum processor, a machine learning processor, an artificial intelligence processor, a neural-network processor, an artificial intelligence accelerator, an application specific integrated circuit (ASIC), an analog signal processor, an analog computer, a microprocessor, a digital signal processor, a field programmable gate array (FPGA), a tensor processing unit (TPU), a data processing unit (DPU), etc.

The computing device 1300 may include a memory 1304, which may itself include one or more memory devices such as volatile memory (e.g., DRAM), nonvolatile memory (e.g., read-only memory (ROM)), high bandwidth memory (HBM), flash memory, solid state memory, and/or a hard drive. Memory 1304 includes one or more non-transitory computer-readable storage media. In some embodiments, memory 1304 may include memory that shares a die with the processing device 1302. In some embodiments, memory 1304 includes one or more non-transitory computer-readable media storing instructions executable to perform operations described herein, such as operations illustrated in FIGS. 1-12, process 400, process 500, process 1000, method 1100, and method 1200. Memory 1304 may include one or more non-transitory computer-readable media storing instructions executable to perform operations associated with adaptive subblock interpolation filtering. Memory 1304 may include one or more non-transitory computer-readable media storing instructions executable to perform operations associated with determining interpolation filter information for blocks. Memory 1304 may include one or more non-transitory computer-readable media storing instructions executable to perform operations applying interpolation filter information to blocks. Memory 1304 may include one or more non-transitory computer-readable media storing one or more of: input frames to the encoder, intermediate data structures computed by the encoder, bitstream generated by the encoder, bitstream received by a decoder, intermediate data structures computed by the decoder, and reconstructed frames generated by the decoder. Memory 1304 may include one or more non-transitory computer-readable media storing one or more of: data received and/or data generated by process 400 of FIG. 4. Memory 1304 may include one or more non-transitory computer-readable media storing one or more of: data received and/or data generated by process 500 of FIG. 5. The instructions stored in the one or more non-transitory computer-readable media may be executed by processing device 1302. In some embodiments, memory 1304 may store data, e.g., data structures, binary data, bits, metadata, files, blobs, etc., as described with the FIGS. and herein. Exemplary data that may be stored in memory 1304 are depicted. Memory 1304 may store one or more data as depicted.

In some embodiments, the computing device 1300 may include a communication device 1312 (e.g., one or more communication devices). For example, the communication device 1312 may be configured for managing wired and/or wireless communications for the transfer of data to and from the computing device 1300. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not. The communication device 1312 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication device 1312 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication device 1312 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication device 1312 may operate in accordance with Code-division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 4G, 4G, 5G, and beyond. The communication device 1312 may operate in accordance with other wireless protocols in other embodiments. The computing device 1300 may include an antenna 1322 to facilitate wireless communications and/or to receive other wireless communications (such as radio frequency transmissions). Computing device 1300 may include receiver circuits and/or transmitter circuits. In some embodiments, the communication device 1312 may manage wired communications, such as electrical, optical, or any other suitable communication protocols (e.g., the Ethernet). As noted above, the communication device 1312 may include multiple communication chips. For instance, a first communication device 1312 may be dedicated to shorter-range wireless communications such as Wi-Fi or Bluetooth, and a second communication device 1312 may be dedicated to longer-range wireless communications such as global positioning system (GPS), EDGE, GPRS, CDMA, WiMAX, LTE, EV-DO, or others. In some embodiments, a first communication device 1312 may be dedicated to wireless communications, and a second communication device 1312 may be dedicated to wired communications.

The computing device 1300 may include power source / power circuitry 1314. The power source / power circuitry 1314 may include one or more energy storage devices (e.g., batteries or capacitors) and/or circuitry for coupling components of the computing device 1300 to an energy source separate from the computing device 1300 (e.g., DC power, AC power, etc.).

The computing device 1300 may include a display device 1306 (or corresponding interface circuitry, as discussed above). The display device 1306 may include any visual indicators, such as a heads-up display, a computer monitor, a projector, a touchscreen display, a liquid crystal display (LCD), a light-emitting diode display, or a flat panel display, for example.

The computing device 1300 may include an audio output device 1308 (or corresponding interface circuitry, as discussed above). The audio output device 1308 may include any device that generates an audible indicator, such as speakers, headsets, or earbuds, for example.

The computing device 1300 may include an audio input device 1318 (or corresponding interface circuitry, as discussed above). The audio input device 1318 may include any device that generates a signal representative of a sound, such as microphones, microphone arrays, or digital instruments (e.g., instruments having a musical instrument digital interface (MIDI) output).

The computing device 1300 may include a GPS device 1316 (or corresponding interface circuitry, as discussed above). The GPS device 1316 may be in communication with a satellite-based system and may receive a location of the computing device 1300, as known in the art.

The computing device 1300 may include a sensor 1330 (or one or more sensors). The computing device 1300 may include corresponding interface circuitry, as discussed above). Sensor 1330 may sense physical phenomenon and translate the physical phenomenon into electrical signals that can be processed by, e.g., processing device 1302. Examples of sensor 1330 may include: capacitive sensor, inductive sensor, resistive sensor, electromagnetic field sensor, light sensor, camera, imager, microphone, pressure sensor, temperature sensor, vibrational sensor, accelerometer, gyroscope, strain sensor, moisture sensor, humidity sensor, distance sensor, range sensor, time-of-flight sensor, pH sensor, particle sensor, air quality sensor, chemical sensor, gas sensor, biosensor, ultrasound sensor, a scanner, etc.

The computing device 1300 may include another output device 1310 (or corresponding interface circuitry, as discussed above). Examples of the other output device 1310 may include an audio codec, a video codec, a printer, a wired or wireless transmitter for providing information to other devices, haptic output device, gas output device, vibrational output device, lighting output device, home automation controller, or an additional storage device.

The computing device 1300 may include another input device 1320 (or corresponding interface circuitry, as discussed above). Examples of the other input device 1320 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 1300 may have any desired form factor, such as a handheld or mobile computer system (e.g., a cell phone, a smart phone, a mobile Internet device, a music player, a tablet computer, a laptop computer, a netbook computer, a personal digital assistant (PDA), an ultramobile personal computer, a remote control, wearable device, headgear, eyewear, footwear, electronic clothing, etc.), a desktop computer system, a server or other networked computing component, a printer, a scanner, a monitor, a set-top box, an entertainment control unit, a vehicle control unit, a digital camera, a digital video recorder, an Internet-of-Things device, or a wearable computer system. In some embodiments, the computing device 1300 may be any other electronic device that processes data.

### Select examples

Example 1 provides a method, including receiving an encoded bitstream, where: the encoded bitstream includes an encoded reference block, interpolation filter information, and residual data for an encoded block; and the interpolation filter information indicates a first interpolation filter type for a first region of a predicted block and a second interpolation filter type for a second region of the predicted block that is different from the first interpolation filter type; decoding the encoded reference block; generating the predicted block based on the decoded reference block; applying the first interpolation filter type to the first region of the predicted block to obtain a first region of a filtered block; applying the second interpolation filter type to the second region of the predicted block to obtain a second region of the filtered block; and outputting a reconstructed block of a reconstructed frame based on the filtered block and the residual data.

Example 2 provides the method of example 1, where: the encoded bitstream further includes predictor information indicating a predictor; and generating the predicted block includes applying the predictor to the decoded reference block.

Example 3 provides the method of example 1 or 2, where: the decoded reference block and the reconstructed block are both in the reconstructed frame.

Example 4 provides the method of example 1 or 2, where: the decoded reference block is part of a reference frame; and the reference frame and the reconstructed frame have different frame indices.

Example 5 provides the method of any one of examples 1-4, where the interpolation filter information includes a filter index.

Example 6 provides the method of any one of examples 1-5, where the interpolation filter information includes a partition shape index indicating a manner to divide the predicted block into at least the first region and the second region; and one or more filter indices indicating the first interpolation filter type and the second interpolation filter type.

Example 7 provides the method of any one of examples 1-6, where the interpolation filter information includes a signal to indicate that the interpolation filter information is the same as a further reconstructed block.

Example 8 provides the method of any one of examples 1-6, where the interpolation filter information includes a filter index residual signal to indicate a residual filter index value relative to a filter index of a further reconstructed block.

Example 9 provides the method of any one of examples 1-8, where the interpolation filter information includes a sequence header signal to indicate whether multiple interpolation filter types are allowed for a given block of a sequence of frames, where the sequence of frames includes the reconstructed frame and further frames.

Example 10 provides the method of any one of examples 1-9, where the interpolation filter information includes a frame header signal to indicate whether multiple interpolation filter types are allowed for a given block of the reconstructed frame.

Example 11 provides the method of any one of examples 1-10, where the interpolation filter information includes a block size signal to indicate one or more block sizes for which multiple interpolation filter types is allowed, and one or more further block sizes for which multiple interpolation filter types is disallowed.

Example 12 provides the method of any one of examples 1-11, where: the first region includes a top half of the decoded reference block; and the second region includes a bottom half of the decoded reference block.

Example 13 provides the method of any one of examples 1-11, where: the first region includes a left half of the decoded reference block; and the second region includes a right half of the decoded reference block.

Example 14 provides the method of any one of examples 1-11, where: the first region includes a first third part of the decoded reference block; and the second region includes a second third part of the decoded reference block.

Example 15 provides the method of any one of examples 1-11, where: the first region includes a first quarter part of the decoded reference block; and the second region includes a second quarter part of the decoded reference block.

Example 16 provides a method, including determining a predicted block for an original block based on a reference block and a predictor, where the predicted block has at least a first region and a second region; applying a first interpolation filter type to the first region of the predicted block to obtain a first region of a first filtered predicted block; applying the first interpolation filter type to the second region of the predicted block to obtain a second region of the first filtered predicted block; applying a second interpolation filter type to the first region of the predicted block to obtain a first region of a second filtered predicted block; applying the second interpolation filter type to the second region of the predicted block to obtain a second region of the second filtered predicted block; determining filter costs based on the original block, the first region of the first filtered predicted block, the second region of the first filtered predicted block, the first region of the second filtered predicted block, and the second region of the second filtered predicted block; and determining interpolation filter information for encoding the predicted block based on the filter costs.

Example 17 provides the method of example 16, where determining the filter costs includes determining a first distortion cost based on the first region of the first filtered predicted block and the original block; determining a second distortion cost based on the second region of the first filtered predicted block and the original block; determining a third distortion cost based on the first region of the second filtered predicted block and the original block; and determining a fourth distortion cost based on the second region of the second filtered predicted block and the original block.

Example 18 provides the method of example 16 or 17, where determining the filter costs includes determining a first signaling cost for a first option for the interpolation filter information that indicates different interpolation filter types for the predicted block; and determining a second signaling cost for a second option for the interpolation filter information that indicates a single interpolation filter type for the predicted block.

Example 19 provides the method of any one of examples 16-18, where determining the filter costs includes determining a first filter cost of the filter costs based on a first distortion cost and a first signaling cost for a first option for the interpolation filter information; and determining a second filter cost of the filter costs based on a second distortion cost and a second signaling cost for a second option for the interpolation filter information.

Example 20 provides the method of any one of examples 16-19, where determining the interpolation filter information includes determining an optimal filter cost in the filter costs; and determining the interpolation filter information that corresponds to the optimal filter cost.

Example 21 provides an apparatus, including one or more processors to executing instructions; and one or more non-transitory computer-readable media storing instructions that, when executed by the one or more processors, cause the one or more processors to: receive an encoded bitstream, where: the encoded bitstream includes an encoded reference block, interpolation filter information, and residual data for an encoded block; and the interpolation filter information indicates a first interpolation filter type for a first region of a predicted block and a second interpolation filter type for a second region of the predicted block that is different from the first interpolation filter type; decode the encoded reference block; generate the predicted block based on the decoded reference block; apply the first interpolation filter type to the first region of the predicted block to obtain a first region of a filtered block; apply the second interpolation filter type to the second region of the predicted block to obtain a second region of the filtered block; and output a reconstructed block of a reconstructed frame based on the filtered block and the residual data.

Example 22 provides the apparatus of example 21, where: the encoded bitstream further includes predictor information indicating a predictor; and generating the predicted block includes applying the predictor to the decoded reference block.

Example 23 provides the apparatus of example 21 or 22, where: the decoded reference block and the reconstructed block are both in the reconstructed frame.

Example 24 provides the apparatus of example 21 or 22, where: the decoded reference block is part of a reference frame; and the reference frame and the reconstructed frame have different frame indices.

Example 25 provides the apparatus of any one of examples 21-24, where the interpolation filter information includes a filter index.

Example 26 provides the apparatus of any one of examples 21-25, where the interpolation filter information includes a partition shape index indicating a manner to divide the predicted block into at least the first region and the second region; and one or more filter indices indicating the first interpolation filter type and the second interpolation filter type.

Example 27 provides the apparatus of any one of examples 21-26, where the interpolation filter information includes a signal to indicate that the interpolation filter information is the same as a further reconstructed block.

Example 28 provides the apparatus of any one of examples 21-26, where the interpolation filter information includes a filter index residual signal to indicate a residual filter index value relative to a filter index of a further reconstructed block.

Example 29 provides the apparatus of any one of examples 21-28, where the interpolation filter information includes a sequence header signal to indicate whether multiple interpolation filter types are allowed for a given block of a sequence of frames, where the sequence of frames includes the reconstructed frame and further frames.

Example 30 provides the apparatus of any one of examples 21-29, where the interpolation filter information includes a frame header signal to indicate whether multiple interpolation filter types are allowed for a given block of the reconstructed frame.

Example 31 provides the apparatus of any one of examples 21-30, where the interpolation filter information includes a block size signal to indicate one or more block sizes for which multiple interpolation filter types is allowed, and one or more further block sizes for which multiple interpolation filter types is disallowed.

Example 32 provides the apparatus of any one of examples 21-31, where: the first region includes a top half of the decoded reference block; and the second region includes a bottom half of the decoded reference block.

Example 33 provides the apparatus of any one of examples 21-31, where: the first region includes a left half of the decoded reference block; and the second region includes a right half of the decoded reference block.

Example 34 provides the apparatus of any one of examples 21-31, where: the first region includes a first third part of the decoded reference block; and the second region includes a second third part of the decoded reference block.

Example 35 provides the apparatus of any one of examples 21-31, where: the first region includes a first quarter part of the decoded reference block; and the second region includes a second quarter part of the decoded reference block.

Example 36 provides an apparatus, including one or more processors to executing instructions; and one or more non-transitory computer-readable media storing instructions that, when executed by the one or more processors, cause the one or more processors to: determine a predicted block for an original block based on a reference block and a predictor, where the predicted block has at least a first region and a second region; apply a first interpolation filter type to the first region of the predicted block to obtain a first region of a first filtered predicted block; apply the first interpolation filter type to the second region of the predicted block to obtain a second region of the first filtered predicted block; apply a second interpolation filter type to the first region of the predicted block to obtain a first region of a second filtered predicted block; apply the second interpolation filter type to the second region of the predicted block to obtain a second region of the second filtered predicted block; determine filter costs based on the original block, the first region of the first filtered predicted block, the second region of the first filtered predicted block, the first region of the second filtered predicted block, and the second region of the second filtered predicted block; and determine interpolation filter information for encoding the predicted block based on the filter costs.

Example 37 provides the apparatus of example 36, where determining the filter costs includes determining a first distortion cost based on the first region of the first filtered predicted block and the original block; determining a second distortion cost based on the second region of the first filtered predicted block and the original block; determining a third distortion cost based on the first region of the second filtered predicted block and the original block; and determining a fourth distortion cost based on the second region of the second filtered predicted block and the original block.

Example 38 provides the apparatus of example 36 or 37, where determining the filter costs includes determining a first signaling cost for a first option for the interpolation filter information that indicates different interpolation filter types for the predicted block; and determining a second signaling cost for a second option for the interpolation filter information that indicates a single interpolation filter type for the predicted block.

Example 39 provides the apparatus of any one of examples 36-38, where determining the filter costs includes determining a first filter cost of the filter costs based on a first distortion cost and a first signaling cost for a first option for the interpolation filter information; and determining a second filter cost of the filter costs based on a second distortion cost and a second signaling cost for a second option for the interpolation filter information.

Example 40 provides the apparatus of any one of examples 36-39, where determining the interpolation filter information includes determining an optimal filter cost in the filter costs; and determining the interpolation filter information that corresponds to the optimal filter cost.

Example 41 provides one or more non-transitory computer-readable media storing instructions that, when executed by one or more processors, cause the one or more processors to: receive an encoded bitstream, where: the encoded bitstream includes an encoded reference block, interpolation filter information, and residual data for an encoded block; and the interpolation filter information indicates a first interpolation filter type for a first region of a predicted block and a second interpolation filter type for a second region of the predicted block that is different from the first interpolation filter type; decode the encoded reference block; generate the predicted block based on the decoded reference block; apply the first interpolation filter type to the first region of the predicted block to obtain a first region of a filtered block; apply the second interpolation filter type to the second region of the predicted block to obtain a second region of the filtered block; and output a reconstructed block of a reconstructed frame based on the filtered block and the residual data.

Example 42 provides the one or more non-transitory computer-readable media of example 41, where: the encoded bitstream further includes predictor information indicating a predictor; and generating the predicted block includes applying the predictor to the decoded reference block.

Example 43 provides the one or more non-transitory computer-readable media of example 41 or 42, where: the decoded reference block and the reconstructed block are both in the reconstructed frame.

Example 44 provides the one or more non-transitory computer-readable media of example 41 or 42, where: the decoded reference block is part of a reference frame; and the reference frame and the reconstructed frame have different frame indices.

Example 45 provides the one or more non-transitory computer-readable media of any one of examples 41-44, where the interpolation filter information includes a filter index.

Example 46 provides the one or more non-transitory computer-readable media of any one of examples 41-45, where the interpolation filter information includes a partition shape index indicating a manner to divide the predicted block into at least the first region and the second region; and one or more filter indices indicating the first interpolation filter type and the second interpolation filter type.

Example 47 provides the one or more non-transitory computer-readable media of any one of examples 41-46, where the interpolation filter information includes a signal to indicate that the interpolation filter information is the same as a further reconstructed block.

Example 48 provides the one or more non-transitory computer-readable media of any one of examples 41-46, where the interpolation filter information includes a filter index residual signal to indicate a residual filter index value relative to a filter index of a further reconstructed block.

Example 49 provides the one or more non-transitory computer-readable media of any one of examples 41-48, where the interpolation filter information includes a sequence header signal to indicate whether multiple interpolation filter types are allowed for a given block of a sequence of frames, where the sequence of frames includes the reconstructed frame and further frames.

Example 50 provides the one or more non-transitory computer-readable media of any one of examples 41-49, where the interpolation filter information includes a frame header signal to indicate whether multiple interpolation filter types are allowed for a given block of the reconstructed frame.

Example 51 provides the one or more non-transitory computer-readable media of any one of examples 41-50, where the interpolation filter information includes a block size signal to indicate one or more block sizes for which multiple interpolation filter types is allowed, and one or more further block sizes for which multiple interpolation filter types is disallowed.

Example 52 provides the one or more non-transitory computer-readable media of any one of examples 41-51, where: the first region includes a top half of the decoded reference block; and the second region includes a bottom half of the decoded reference block.

Example 53 provides the one or more non-transitory computer-readable media of any one of examples 41-51, where: the first region includes a left half of the decoded reference block; and the second region includes a right half of the decoded reference block.

Example 54 provides the one or more non-transitory computer-readable media of any one of examples 41-51, where: the first region includes a first third part of the decoded reference block; and the second region includes a second third part of the decoded reference block.

Example 55 provides the one or more non-transitory computer-readable media of any one of examples 41-51, where: the first region includes a first quarter part of the decoded reference block; and the second region includes a second quarter part of the decoded reference block.

Example 56 provides one or more non-transitory computer-readable media storing instructions that, when executed by one or more processors, cause the one or more processors to: determine a predicted block for an original block based on a reference block and a predictor, where the predicted block has at least a first region and a second region; apply a first interpolation filter type to the first region of the predicted block to obtain a first region of a first filtered predicted block; apply the first interpolation filter type to the second region of the predicted block to obtain a second region of the first filtered predicted block; apply a second interpolation filter type to the first region of the predicted block to obtain a first region of a second filtered predicted block; apply the second interpolation filter type to the second region of the predicted block to obtain a second region of the second filtered predicted block; determine filter costs based on the original block, the first region of the first filtered predicted block, the second region of the first filtered predicted block, the first region of the second filtered predicted block, and the second region of the second filtered predicted block; and determine interpolation filter information for encoding the predicted block based on the filter costs.

Example 57 provides the one or more non-transitory computer-readable media of example 56, where determining the filter costs includes determining a first distortion cost based on the first region of the first filtered predicted block and the original block; determining a second distortion cost based on the second region of the first filtered predicted block and the original block; determining a third distortion cost based on the first region of the second filtered predicted block and the original block; and determining a fourth distortion cost based on the second region of the second filtered predicted block and the original block.

Example 58 provides the one or more non-transitory computer-readable media of example 56 or 57, where determining the filter costs includes determining a first signaling cost for a first option for the interpolation filter information that indicates different interpolation filter types for the predicted block; and determining a second signaling cost for a second option for the interpolation filter information that indicates a single interpolation filter type for the predicted block.

Example 59 provides the one or more non-transitory computer-readable media of any one of examples 56-58, where determining the filter costs includes determining a first filter cost of the filter costs based on a first distortion cost and a first signaling cost for a first option for the interpolation filter information; and determining a second filter cost of the filter costs based on a second distortion cost and a second signaling cost for a second option for the interpolation filter information.

Example 60 provides the one or more non-transitory computer-readable media of any one of examples 56-59, where determining the interpolation filter information includes determining an optimal filter cost in the filter costs; and determining the interpolation filter information that corresponds to the optimal filter cost.

Example A provides an apparatus comprising means to carry out or means for carrying out any one of the methods provided in examples 1-20.

Example B provides one or more non-transitory computer-readable media storing instructions that, when executed by one or more processors, cause the one or more processors to perform any one of the methods provided in examples 1-20 and methods described herein.

Example C provides an apparatus, comprising: one or more processors to execute instructions, and one or more non-transitory computer-readable media storing the instructions that, when executed by one or more processors, cause the one or more processors to perform any one of the methods provided in examples 1-20 and methods described herein.

Example D provides an encoder to generate an encoded bitstream using operations described herein.

Example E provides an encoder to perform any one of the methods provided in examples 16-20.-

Example F provides a decoder to decode an encoded bitstream using operations described herein.

Example H provides a decoder to perform any one of the methods provided in examples 1-15.

### Variations and other notes

Although the operations of the example method shown in and described with reference to FIGS. 1-5 and 10-12 are illustrated as occurring once each and in a particular order, it will be recognized that the operations may be performed in any suitable order and repeated as desired. Additionally, one or more operations may be performed in parallel. Furthermore, the operations illustrated in FIGS. 1-5 and 10-12 may be combined or may include more or fewer details than described.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

For purposes of explanation, specific numbers, materials and configurations are set forth in order to provide a thorough understanding of the illustrative implementations. However, it will be apparent to one skilled in the art that the present disclosure may be practiced without the specific details and/or that the present disclosure may be practiced with only some of the described aspects. In other instances, well known features are omitted or simplified in order not to obscure the illustrative implementations.

Further, references are made to the accompanying drawings that form a part hereof, and in which are shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the disclosed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A or B" or the phrase "A and/or B" means (A), (B), or (A and B). For the purposes of the present disclosure, the phrase "A, B, or C" or the phrase "A, B, and/or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value as described herein or as known in the art. Similarly, terms indicating orientation of various elements, e.g., "coplanar," "perpendicular," "orthogonal," "parallel," or any other angle between the elements, generally refer to being within +/- 5-20% of a target value as described herein or as known in the art.

In addition, the terms "comprise," "comprising," "include," "including," "have," "having" or any other variation thereof, are intended to cover a non-exclusive inclusion. For example, a method, process, or device, that comprises a list of elements is not necessarily limited to only those elements but may include other elements not expressly listed or inherent to such method, process, or device. Also, the term "or" refers to an inclusive "or" and not to an exclusive "or."

The systems, methods and devices of this disclosure each have several innovative aspects, no single one of which is solely responsible for all desirable attributes disclosed herein. Details of one or more implementations of the subject matter described in this specification are set forth in the description and the accompanying drawings.

## Claims

1. A method, comprising:
receiving an encoded bitstream, wherein:
the encoded bitstream comprises an encoded reference block, interpolation filter information, and residual data for an encoded block; and
the interpolation filter information indicates a first interpolation filter type for a first region of a predicted block and a second interpolation filter type for a second region of the predicted block that is different from the first interpolation filter type;
decoding the encoded reference block;
generating the predicted block based on the decoded reference block;
applying the first interpolation filter type to the first region of the predicted block to obtain a first region of a filtered block;
applying the second interpolation filter type to the second region of the predicted block to obtain a second region of the filtered block; and
outputting a reconstructed block of a reconstructed frame based on the filtered block and the residual data.

2. The method of claim 1, wherein:
the encoded bitstream further comprises predictor information indicating a predictor; and
generating the predicted block comprises applying the predictor to the decoded reference block.

3. The method of claim 1 or 2, wherein:
the decoded reference block and the reconstructed block are both in the reconstructed frame.

4. The method of claim 1 or 2, wherein:
the decoded reference block is part of a reference frame; and
the reference frame and the reconstructed frame have different frame indices.

5. The method of any one of claims 1-4, wherein the interpolation filter information comprises a filter index.

6. The method of any one of claims 1-5, wherein the interpolation filter information comprises:
a partition shape index indicating a manner to divide the predicted block into at least the first region and the second region; and
one or more filter indices indicating the first interpolation filter type and the second interpolation filter type.

7. The method of any one of claims 1-6, wherein the interpolation filter information comprises:
a signal to indicate that the interpolation filter information is the same as a further reconstructed block.

8. The method of any one of claims 1-7, wherein the interpolation filter information comprises:
a filter index residual signal to indicate a residual filter index value relative to a filter index of a further reconstructed block.

9. The method of any one of claims 1-8, wherein the interpolation filter information comprises:
a sequence header signal to indicate whether multiple interpolation filter types are allowed for a given block of a sequence of frames, wherein the sequence of frames comprises the reconstructed frame and further frames.

10. The method of any one of claims 1-9, wherein the interpolation filter information comprises:
a frame header signal to indicate whether multiple interpolation filter types are allowed for a given block of the reconstructed frame.

11. The method of any one of claims 1-10, wherein the interpolation filter information comprises:
a block size signal to indicate one or more block sizes for which multiple interpolation filter types is allowed, and one or more further block sizes for which multiple interpolation filter types is disallowed.

12. The method of any one of claims 1-11, wherein:
the first region comprises a top half of the decoded reference block; and
the second region comprises a bottom half of the decoded reference block.

13. The method of any one of claims 1-11, wherein:
the first region comprises a left half of the decoded reference block; and
the second region comprises a right half of the decoded reference block.

14. An apparatus, comprising:
one or more processors to executing instructions; and
one or more non-transitory computer-readable media storing instructions that, when executed by the one or more processors, cause the one or more processors to perform a method according to any one of claims 1-13.

15. One or more non-transitory computer-readable media storing instructions that, when executed by one or more processors, cause the one or more processors to perform a method according to any one of claims 1-13.
